# EUROPEAN PATENT APPLICATION

(11) **EP 4 195 834 A1**
(43) Date of publication of application: **14.06.2023**
(21) Application number: 21859888.6
(22) Date of filing: 05.07.2021
(51) Int. Cl.: H04W 72/04, H04L 5/00

(54) **COMMUNICATION METHOD AND APPARATUS**

(30) Priority: 26.08.2020 WO PCT/CN2020/111418; 19.10.2020 WO PCT/CN2020/121954
(71) Applicant: Huawei Technologies Co., Ltd., Shenzhen, Guangdong 518129 (CN)
(72) Inventor: LI, Shengyu, Shenzhen, Guangdong 518129 (CN); GUAN, Lei, Shenzhen, Guangdong 518129 (CN); LI, Ruijie, Shenzhen, Guangdong 518129 (CN)
(74) Representative: Pfenning, Meinig & Partner mbB
(86) International application number: PCT/CN2021/104560
(87) International publication number: WO 2022/042048

(57) **Abstract**

A communication method and apparatus are provided, to configure different frame structures for different frequency domain resources in a dual-spectrum scenario. A network device sends information for configuring a first frequency domain resource and a second frequency domain resource to a terminal device, where the first frequency domain resource corresponds to a frame structure A, the second frequency domain resource corresponds to a frame structure B, the frame structure A is different from the frame structure B, and the first frequency domain resource and the second frequency domain resource are two different bandwidth parts BWPs on a first component carrier, or the first frequency domain resource and the second frequency domain resource are two different subbands in a first BWP. The terminal device performs first transmission on the first frequency domain resource and/or the second frequency domain resource. Therefore, in the dual-spectrum scenario, different frame structures can be configured for different frequency domain resources, and the terminal device can perform fast switching and retransmission combination between different frequency domain resources.

## Description

### TECHNICAL FIELD

This application relates to the field of communication technologies, and in particular, to a communication method and apparatus.

### BACKGROUND

A 5G communication system is dedicated to supporting higher system performance, for example, supporting a plurality of service types, different deployment scenarios, and a wider spectral range. The plurality of service types may include an enhanced mobile broadband (enhanced mobile broadband, eMBB) service, a massive machine-type communications (massive machine-type Communication, mMTC) service, an ultra-reliable low-latency communication (ultra-reliable low-latency communication, URLLC) service, a multimedia broadcast multicast service (Multimedia Broadcast Multicast Service, MBMS), a positioning service, or the like. The deployment scenarios may include an indoor hotspot (indoor hotspot) scenario, a dense urban (dense urban) scenario, a suburban scenario, an urban macro (urban macro) scenario, a high-speed railway scenario, or the like. The wider spectral range is a spectral range up to 100 GHz that is supported by 5G, includes a low-frequency part less than 6 GHz, and also includes a high-frequency part ranging from 6 GHz to 100 GHz.

Industrial automation is a typical application scenario of 5th generation (5th generation, 5G) mobile communication. A plurality of services are deployed in a factory, for example, an uplink large-capacity service mainly based on real-time camera surveillance, a downlink large-capacity service mainly based on device testing, and a URLLC service mainly based on control automation. For a URLLC service, a low-latency requirement imposes an extremely high latency requirement on each phase of data communication. However, for a time division duplex (time division duplex, TDD) frequency band, an uplink-downlink switching latency caused by a fixed frame structure greatly increases a waiting latency from service arrival to a data transmission occasion. For example, a motion control service usually requires round-trip time of 1 ms (that is, a unidirectional air interface latency is 0.5 ms). However, a typical frame structure in an existing C-band is a 30 kHz subcarrier spacing and a 7D: 1S:2U frame structure (where a frame structure "xD:yS:zU" indicates that an uplink-downlink switching periodicity includes x consecutive downlink slots, y flexible slots, and z consecutive uplink slots), and a downlink-uplink switching periodicity is 5 ms, which obviously cannot meet the requirement of the round-trip time of 1 ms. To meet the requirement of the round-trip time of 1 ms or a requirement of a unidirectional transmission latency of 0.5 ms, a sub-slot-level frame structure is introduced. However, such sub-slot-level uplink-downlink switching and transmission inevitably cause greater switching overheads and pilot/control overheads, which is extremely unfavorable to a normal uplink large-capacity or downlink large-capacity service.

Therefore, how to design an appropriate spectrum usage policy and an appropriate frame structure in a dual-spectrum scenario is a problem that needs to be resolved currently.

### SUMMARY

Embodiments of this application provide a communication method and apparatus, to configure different frame structures for different frequency domain resources in a dual-spectrum scenario.

According to a first aspect, this application provides a communication method. The method may be performed by a terminal device, or may be performed by a chip used in the terminal device. The following provides descriptions by using an example in which the method is performed by the terminal device. The terminal device receives information for configuring a first frequency domain resource and a second frequency domain resource, where the first frequency domain resource corresponds to a frame structure A, the second frequency domain resource corresponds to a frame structure B, the frame structure A is different from the frame structure B. The terminal device performs first transmission on the first frequency domain resource and/or the second frequency domain resource. For example, the first frequency domain resource and the second frequency domain resource are two different bandwidth parts BWPs on a first component carrier CC. For another example, the first frequency domain resource and the second frequency domain resource are two different subbands in a first BWP. For still another example, the first frequency domain resource and the second frequency domain resource are different CCs. According to the method provided in this application, in a dual-spectrum scenario, different frame structures can be configured for different frequency domain resources, and the terminal device can perform fast switching and retransmission combination between different frequency domain resources.

In an example, the first frequency domain resource and the second frequency domain resource may be included in a sixth frequency domain resource. For example, if the first frequency domain resource and the second frequency domain resource may be two subbands in the first BWP, the sixth frequency domain resource may be the first BWP, or the sixth frequency domain resource may be a third subband in the first BWP, and an RB resource included in the third subband is equal to a union set of RB resources included in a first subband and a second subband. For another example, if the first frequency domain resource and the second frequency domain resource are two BWPs on the first CC, the sixth frequency domain resource may be the first CC, or the sixth frequency domain resource may be a third BWP on the first CC, and an RB resource included in the third BWP is equal to a union set of RB resources included in a first BWP and a second BWP. For example, if the first frequency domain resource and the second frequency domain resource are two CCs in a first band, the sixth frequency domain resource may be the first band, or the sixth frequency domain resource may be a third CC in the first band, and an RB resource included in the third CC is equal to a union set of RB resources included in a first CC and a second CC. In this manner, different frame structures can be configured for different frequency domain resources in the sixth frequency domain resource, and it can be ensured that the terminal device has, on any symbol in the sixth frequency domain resource, a frequency domain resource on which the first transmission can be performed.

In a possible design, a switching latency of the terminal device switching from the first frequency domain resource to the second frequency domain resource is less than a switching latency of the terminal device switching from the second frequency domain resource to a third frequency domain resource, the first frequency domain resource and the second frequency domain resource belong to a first frequency domain resource set, and the third frequency domain resource belongs to a second frequency domain resource set. For example, the third frequency domain resource, the first frequency domain resource, and the second frequency domain resource are three different BWPs on the first CC, the first frequency domain resource and the second frequency domain resource belong to a first BWP set, and the third frequency domain resource belongs to a second BWP set. The first frequency domain resource set and the second frequency domain resource set may be indicated by first configuration information sent by a network device. The first frequency domain resource and the second frequency domain resource meet at least one of the following relationships: a frequency domain position of the first frequency domain resource does not overlap a frequency domain position of the second frequency domain resource; a frequency domain width of the first frequency domain resource is the same as a frequency domain width of the second frequency domain resource; or a subcarrier spacing of the first frequency domain resource is the same as a subcarrier spacing of the second frequency domain resource.

In this design, all frequency domain resources are grouped into a plurality of sets, so that it can be ensured that frequency domain resources in a same set have some identical parameter configurations, to reduce a switching latency between different frequency domain resources in the same set. In this way, the network device may determine a switching latency required for the terminal device switching between different frequency domain resources, to select an appropriate scheduling latency for different frequency domain resource switching behaviors (switching within a set or switching between different sets) when scheduling the first transmission, to ensure that the terminal device has sufficient time to perform switching processing and subsequent sending and receiving processing.

In a possible design, the first frequency domain resource and the second frequency domain resource are different CCs, and the first transmission is hybrid automatic repeat request HARQ retransmission scheduled by using first DCI. The method further includes: obtaining first indication information, where the first indication information indicates a fourth frequency domain resource, where the fourth frequency domain resource is a frequency domain resource on which HARQ initial transmission corresponding to the first transmission is performed, and the fourth frequency domain resource is a CC. Optionally, the first indication information may be carried in the first DCI. Optionally, the fourth frequency domain resource and a target frequency domain resource on which the first transmission is performed are different frequency domain resources. To be specific, the frequency domain resource on which the initial transmission is performed is indicated, so that the terminal device can correctly perform combined decoding for retransmission and initial transmission. It should be understood that the fourth frequency domain resource belongs to the first frequency domain resource set, that is, the fourth frequency domain resource and the target frequency domain resource belong to one frequency domain resource set. It is ensured that the fourth frequency domain resource and the target frequency domain resource belong to one frequency domain resource set, so that a frequency domain resource switching latency of the terminal device can be reduced, and a data retransmission processing latency can be reduced.

In a possible design, the first frequency domain resource and the second frequency domain resource are different Ccs, and the first transmission is data transmission (including downlink data transmission or uplink data transmission) scheduled by using first DCI. The method further includes: obtaining first indication information, where the first indication information indicates a fourth frequency domain resource, the fourth frequency domain resource is a frequency domain resource on which latest transmission of a HARQ process number corresponding to the first transmission is performed, and the fourth frequency domain resource is the first frequency domain resource or the second frequency domain resource. Optionally, the first indication information may be carried in the first DCI. Optionally, the fourth frequency domain resource and the target frequency domain resource on which the first transmission is performed are different frequency domain resources. A specific frequency domain resource on which the latest transmission of the HARQ process number of the first transmission is performed is determined, and whether current transmission is retransmission of the latest transmission or new transmission is determined with reference to a transmission manner of the latest transmission (for example, dynamic scheduled transmission or configured transmission) and an NDI value in scheduling DCI (for scheduled transmission).

In a possible design, the first frequency domain resource and the second frequency domain resource are different CCs, the first transmission is data transmission (including downlink data transmission or uplink data transmission) scheduled by using first DCI, and the first transmission corresponds to a first HARQ process number. The method further includes: obtaining first indication information, where the first indication information indicates a fourth frequency domain resource and a second HARQ process number on the fourth frequency domain resource, the fourth frequency domain resource is the first frequency domain resource or the second frequency domain resource, and the first transmission is retransmission of latest transmission corresponding to the second HARQ process number on the fourth frequency domain resource. Optionally, the first indication information may be carried in the first DCI. Optionally, the fourth frequency domain resource and the target frequency domain resource on which the first transmission is performed are different frequency domain resources. The second HARQ process number is further indicated, so that different HARQ processes on different frequency domain resources can be associated with each other, thereby improving scheduling flexibility.

In a possible design, the terminal device further obtains second indication information and third indication information, where the second indication information indicates a target frequency domain resource, the third indication information indicates a resource block RB position of a frequency domain resource used for the first transmission in the target frequency domain resource, and the target frequency domain resource is the first frequency domain resource or the second frequency domain resource. Optionally, the first transmission is hybrid automatic repeat request-acknowledgment HARQ-ACK transmission for downlink data transmission dynamically scheduled by using second DCI, and the second indication information is carried in the second DCI. In this manner, the network device separately indicates the target frequency domain resource and a frequency domain RB position in the target frequency domain resource. This indication method is simple and has backward compatibility. In addition, frequency domain RB position indication overheads in the target frequency domain resource are low.

In a possible design, the terminal device may further obtain fourth indication information, where the fourth indication information indicates a time domain position for performing the first transmission; and determine a target frequency domain resource based on the time domain position, the frame structure A, and the frame structure B, where the target frequency domain resource is the first frequency domain resource or the second frequency domain resource. For example, when the first transmission is uplink transmission, and the frame structure A and the frame structure B at the time domain position are uplink symbols, the target frequency domain resource is predefined in a protocol or is configured by the network device for the terminal device by using radio resource control RRC signaling; and/or when the first transmission is uplink transmission, the frame structure A at the time domain position is an uplink symbol, and the frame structure B is not an uplink symbol, the target frequency domain resource is the first frequency domain resource; and/or when the first transmission is uplink transmission, the frame structure A at the time domain position is not an uplink symbol, and the frame structure B is an uplink symbol, the target frequency domain resource is the second frequency domain resource; and/or when the first transmission is downlink transmission, and the frame structure A and the frame structure B at the time domain position are downlink symbols, the target frequency domain resource is predefined in the protocol or is configured by the network device for the terminal device by using radio resource control RRC signaling; and/or when the first transmission is downlink transmission, the frame structure A at the time domain position is a downlink symbol, and the frame structure B is not a downlink symbol, the target frequency domain resource is the first frequency domain resource; and/or when the first transmission is downlink transmission, the frame structure A at the time domain position is not a downlink symbol, and the frame structure B is a downlink symbol, the target frequency domain resource is the second frequency domain resource.

In a possible design, the first frequency domain resource and the second frequency domain resource are two different BWPs on the first CC, and the terminal device may further obtain fifth indication information, where the fifth indication information indicates a frequency domain position of the first transmission on the first CC; and determine a target frequency domain resource based on the frequency domain position, where the target frequency domain resource is the first frequency domain resource or the second frequency domain resource. For example, the fifth indication information may indicate an RB position occupied by the first transmission on the first CC, for example, an occupied RB set, or a number of an occupied start RB and a quantity of consecutively occupied RBs.

In a possible design, the first frequency domain resource and the second frequency domain resource are two different subbands in the first BWP, and the terminal device may further obtain sixth indication information, where the sixth indication information indicates a frequency domain position of the first transmission in the first BWP; and determine a target frequency domain resource based on the frequency domain position, where the target frequency domain resource is the first frequency domain resource or the second frequency domain resource. For example, the sixth indication information may indicate an RB position occupied by the first transmission in the first BWP, and the RB position may be, for example, an RB set, or a number of a start RB and a quantity of consecutively occupied RBs.

In a possible design, the terminal device may further receive third DCI, where the third DCI includes a first field, and the first field indicates the frame structure A and the frame structure B. Specifically, the terminal device determines the frame structure A and the frame structure B based on the first field and a first relationship, where the first relationship includes at least one mapping relationship, and each mapping relationship includes at least two frame structures and one field corresponding to the at least two frame structures. In this manner, the frame structure A and the frame structure B can be dynamically and quickly determined based on the first field, thereby reducing DCI indication overheads.

In a possible design, the terminal device may further receive fourth DCI, where the fourth DCI includes an indication second field and a third field, the second field indicates the frame structure A, and the third field indicates the frame structure B. The terminal device determines the frame structure A based on the second field and a second relationship, and determines the frame structure B based on the third field and a third relationship, where the second relationship and the third relationship each include at least one mapping relationship, and each mapping relationship includes one frame structure and a field corresponding to the frame structure. In this manner, the frame structure A and the frame structure B may be respectively determined based on the second field and the third field, so that maximum indication flexibility can be provided.

In a possible design, the terminal device may further obtain indication information C and indication information D, where the indication information C indicates a time domain position for performing the first transmission, the indication information D indicates a frequency domain position for performing the first transmission, and information about the frequency domain position is information about a frequency domain position in the sixth frequency domain resource. The terminal device performs first transmission at the time domain position and the frequency domain position.

In a possible design, the terminal device adjusts a transceiver channel parameter based on a direction of the first transmission, the frame structure A, and the frame structure B, and performs first transmission at the time domain position and the frequency domain position based on an adjusted transceiver channel.

According to a second aspect, this application provides a communication method. The method may be performed by a network device, or may be performed by a chip used in the network device. The following provides descriptions by using an example in which the method is performed by the network device. The network device sends information for configuring a first frequency domain resource and a second frequency domain resource, where the first frequency domain resource corresponds to a frame structure A, the second frequency domain resource corresponds to a frame structure B, and the frame structure A is different from the frame structure B; and performs first transmission on the first frequency domain resource and/or the second frequency domain resource. The first frequency domain resource and the second frequency domain resource are two different bandwidth parts BWPs on a first component carrier CC, the first frequency domain resource and the second frequency domain resource are two different subbands in a first BWP, or the first frequency domain resource and the second frequency domain resource are different CCs.

In an example, the first frequency domain resource and the second frequency domain resource may be included in a sixth frequency domain resource. For example, if the first frequency domain resource and the second frequency domain resource may be two subbands in the first BWP, the sixth frequency domain resource may be the first BWP, or the sixth frequency domain resource may be a third subband in the first BWP, and an RB resource included in the third subband is equal to a union set of RB resources included in a first subband and a second subband. For another example, if the first frequency domain resource and the second frequency domain resource are two BWPs on the first CC, the sixth frequency domain resource may be the first CC, or the sixth frequency domain resource may be a third BWP on the first CC, and an RB resource included in the third BWP is equal to a union set of RB resources included in a first BWP and a second BWP. For example, if the first frequency domain resource and the second frequency domain resource are two CCs in a first band, the sixth frequency domain resource may be the first band, or the sixth frequency domain resource may be a third CC in the first band, and an RB resource included in the third CC is equal to a union set of RB resources included in a first CC and a second CC.

In a possible design, the first frequency domain resource and the second frequency domain resource meet at least one of the following relationships: a frequency domain position of the first frequency domain resource does not overlap a frequency domain position of the second frequency domain resource; a frequency domain width of the first frequency domain resource is the same as a frequency domain width of the second frequency domain resource; or a subcarrier spacing of the first frequency domain resource is the same as a subcarrier spacing of the second frequency domain resource.

In a possible design, the network device may further send first configuration information to a terminal device, where the first configuration information indicates a first frequency domain resource set and a second frequency domain resource set. A switching latency of the terminal device switching from the first frequency domain resource to the second frequency domain resource is less than a switching latency of the terminal device switching from the second frequency domain resource to a third frequency domain resource, the first frequency domain resource and the second frequency domain resource belong to the first frequency domain resource set, and the third frequency domain resource belongs to the second frequency domain resource set.

In a possible design, the first frequency domain resource and the second frequency domain resource are different CCs, and the first transmission is hybrid automatic repeat request HARQ retransmission scheduled by using first DCI. The network device may further send first indication information to the terminal device, where the first indication information indicates a fourth frequency domain resource, the fourth frequency domain resource is a frequency domain resource on which HARQ initial transmission corresponding to the first transmission is performed, and the fourth frequency domain resource is the first frequency domain resource or the second frequency domain resource.

In a possible design, the first frequency domain resource and the second frequency domain resource are different CCs, and the first transmission is data transmission (including downlink data transmission or uplink data transmission) scheduled by using first DCI. The network device may further send first indication information to the terminal device, where the first indication information indicates a fourth frequency domain resource, the fourth frequency domain resource is a frequency domain resource on which latest transmission of a HARQ process number corresponding to the first transmission is performed, and the fourth frequency domain resource is a CC.

In a possible design, the first frequency domain resource and the second frequency domain resource are different CCs, the first transmission is data transmission (including downlink data transmission or uplink data transmission) scheduled by using first DCI, and the first transmission corresponds to a first HARQ process number. The network device may further send first indication information to the terminal device, where the first indication information indicates a fourth frequency domain resource and a second HARQ process number on the fourth frequency domain resource, the fourth frequency domain resource is the first frequency domain resource or the second frequency domain resource, and the first transmission is retransmission of latest transmission corresponding to the second HARQ process number on the fourth frequency domain resource.

In a possible design, the network device may further send second indication information and third indication information to the terminal device, where the second indication information indicates a target frequency domain resource, the third indication information indicates a frequency domain position of a frequency domain resource used for the first transmission in the target frequency domain resource, and the target frequency domain resource is the first frequency domain resource or the second frequency domain resource.

In a possible design, the first transmission is hybrid automatic repeat request-acknowledgment HARQ-ACK transmission for downlink data transmission dynamically scheduled by using second DCI, and the second indication information is carried in the second DCI.

In a possible design, the network device may further send fourth indication information to the terminal device, where the fourth indication information indicates a time domain position for performing the first transmission.

In a possible design, the first frequency domain resource and the second frequency domain resource are two different BWPs on the first CC, and the network device may further send fifth indication information to the terminal device, where the fifth indication information indicates a frequency domain position of the first transmission on the first CC.

In a possible design, the first frequency domain resource and the second frequency domain resource are two different subbands in the first BWP, and the network device may further send sixth indication information to the terminal device, where the sixth indication information indicates a frequency domain position of the first transmission in the first BWP.

In a possible design, the network device may further send third DCI to the terminal device, where the third DCI includes a first field, and the first field indicates the frame structure A and the frame structure B.

In a possible design, the network device may further send fourth DCI to the terminal device, where the fourth DCI includes a second field and a third field, the second field indicates the frame structure A, and the third field indicates the frame structure B.

In a possible design, the network device may further send indication information C and indication information D to the terminal device, where the indication information C indicates a time domain position for performing the first transmission, the indication information D indicates a frequency domain position for performing the first transmission, and information about the frequency domain position is information about a frequency domain position in the sixth frequency domain resource. The terminal device performs first transmission at the time domain position and the frequency domain position.

In a possible design, the network device adjusts a transceiver channel parameter based on a direction of the first transmission, the frame structure A, and the frame structure B, and performs first transmission at the time domain position and the frequency domain position based on an adjusted transceiver channel.

For beneficial effects of the methods in the second aspect, refer to beneficial effects of the methods in the first aspect. Details are not described herein again.

According to a third aspect, this application provides a communication method. The method may be performed by a terminal device, or may be performed by a chip used in the terminal device. The following provides descriptions by using an example in which the method is performed by the terminal device. The terminal device determines a third frequency domain resource set, where the third frequency domain resource set includes at least two frequency domain resources. The terminal device determines, based on first information, a number of a frequency domain resource associated with each or at least one time unit in a first time unit set for the terminal device, where the associated frequency domain resource belongs to the third frequency domain resource set, the first time unit set includes N time units, and N is a positive integer greater than or equal to 2. According to the method provided in this application, frequency domain resources associated with the N time units in the first time unit set may be indicated by using the first information, to avoid a case in which one piece of switching indication signaling needs to be sent for each time of frequency domain resource switching, thereby reducing signaling overheads.

According to a fourth aspect, this application provides a communication method. The method may be performed by a network device, or may be performed by a chip used in the network device. The following provides descriptions by using an example in which the method is performed by the network device. The network device determines a third frequency domain resource set, where the third frequency domain resource set includes at least two frequency domain resources. The network device determines first information, where the first information indicates a number of a frequency domain resource associated with each or at least one time unit in a first time unit set of a terminal device, the associated frequency domain resource belongs to the third frequency domain resource set, the first time unit set includes N time units, and N is a positive integer greater than or equal to 2. The network device sends the third frequency domain resource set and the first information to the terminal device.

In a possible design of the third aspect or the fourth aspect, the at least two frequency domain resources included in the third frequency domain resource set may be at least two component carriers, at least two BWPs, or at least two subbands. For example, the third frequency domain resource set includes at least two BWPs on a first CC.

In a possible design of the third aspect or the fourth aspect, the terminal device does not support simultaneous information receiving and/or information sending on a plurality of frequency domain resources in the third frequency domain resource set.

In a possible design of the third aspect or the fourth aspect, each time unit in the first time unit set is one slot, one symbol, or one subslot.

In a possible design of the third aspect or the fourth aspect, the network device sends first information, and correspondingly, the terminal device obtains the first information. The first information indicates a number of a frequency domain resource associated with each time unit in the first time unit set, and the associated frequency domain resource belongs to the third frequency domain resource set. Optionally, the first information further indicates a number of a frequency domain resource associated with each time unit in the first time unit set and a communication direction of information transmission performed in the time unit. The communication direction may be downlink information receiving or uplink information sending.

In a possible design of the third aspect or the fourth aspect, the first information may include P fields, and the P fields correspond to a first time window whose length is P time units. An i^{th} field in the P fields indicates a number of a frequency domain resource associated with an i^{th} time unit in the first time window, or an i^{th} field in the P fields indicates a number of a frequency domain resource associated with an i^{th} time unit in the first time window and a communication direction, where a start position of the first time window is an (S+j^{∗}P)^{th} time unit, and j is an integer greater than or equal to zero.

In a possible design of the third aspect or the fourth aspect, the first information may include first indication sub-information and second indication sub-information, the first indication sub-information and the second indication sub-information each include P fields, the P fields correspond to P time units in the first time window, an i^{th} field in the first indication sub-information indicates a number of a downlink frequency domain resource associated with an i^{th} time unit in the first time window, and an i^{th} field in the second indication sub-information indicates a number of an uplink frequency domain resource associated with the i^{th} time unit in the first time window.

In a possible design of the third aspect or the fourth aspect, the third frequency domain resource set includes a frequency domain resource A and a frequency domain resource B, and the first information indicates a frame structure E of the frequency domain resource A and a frame structure F of the frequency domain resource B. In addition, the first time unit set corresponds to a time unit set in which the terminal device performs first downlink transmission, and the first downlink transmission includes at least one of a semi-persistent downlink data channel (SPS PDSCH), periodic/semi-persistent channel state information (Channel State Information, CSI)-reference signal (Reference Signal, RS), or a downlink control channel PDCCH configured by a higher layer. In this case, the first information indicates the frame structure E and the frame structure F, and that a number of a frequency domain resource associated with each time unit in the first time unit set for the terminal device is determined based on the first information includes:

For a first time unit in the first time set unit, when the frame structure E corresponds to a downlink symbol and the frame structure F corresponds to an uplink symbol, a number of a frequency domain resource for information sending and receiving in the first time unit is a number of the frequency domain resource A; when the frame structure E corresponds to an uplink symbol and the frame structure F corresponds to a downlink symbol, a number of a frequency domain resource associated with the first time unit is a number of the frequency domain resource B; when the frame structure E corresponds to a downlink symbol and the frame structure F corresponds to a downlink symbol, a number of a frequency domain resource associated with the first time unit is a number of a frequency domain resource C. The frequency domain resource C is a preset frequency domain resource in the frequency domain resource A or the frequency domain resource B, the frequency domain resource C is a frequency domain resource associated with a previous time unit closest to the first time unit for the terminal device, or the frequency domain resource C is a frequency domain resource used by the terminal device to send and receive information in a second time unit, where the second time unit is a previous time unit that is in the first time unit set and closest to the first time unit.

In a possible design of the third aspect or the fourth aspect, the third frequency domain resource set includes a frequency domain resource A and a frequency domain resource B, and the first information determines to indicate a frame structure E corresponding to the frequency domain resource A and a frame structure F corresponding to the frequency domain resource B. In addition, the first time unit set is a corresponding time unit set in which the terminal device performs first uplink transmission, and the first uplink transmission includes at least one of feedback information HARQ-ACK of an SPS PDSCH, an uplink data channel PUSCH with a configured grant, periodic/semi-persistent CSI reporting, a periodic scheduling request SR, a periodic/semi-persistent sounding reference signal SRS, or a periodic random access channel. In this case, the first information indicates the frame structure E and the frame structure F, and that a number of a frequency domain resource associated with each time unit in the first time unit set for the terminal device is determined based on the first information includes:

For a first time unit in the first time set unit, when the frame structure E corresponds to a downlink symbol and the frame structure F corresponds to an uplink symbol, a number of a frequency domain resource associated with the first time unit is a number of the frequency domain resource B; when the frame structure E corresponds to an uplink symbol and the frame structure F corresponds to a downlink symbol, a number of a frequency domain resource associated with the first time unit is a number of the frequency domain resource A; when the frame structure E corresponds to a downlink symbol and the frame structure F corresponds to a downlink symbol, a number of a frequency domain resource associated with the first time unit is a number of a frequency domain resource D. The frequency domain resource D is a preset frequency domain resource in the frequency domain resource A or the frequency domain resource B, the frequency domain resource D is a frequency domain resource associated with a previous time unit closest to the first time unit, or the frequency domain resource D is a frequency domain resource used by the terminal device and the network device to send and receive information in a third time unit, where the third time unit is a previous time unit that is in the first time unit set and closest to the first time unit.

According to a fifth aspect, a communication apparatus is provided. For beneficial effects, refer to the descriptions of the first aspect. Details are not described herein again. The communication apparatus has a function of implementing the behavior in the method example in the first aspect. The function may be implemented by hardware, or may be implemented by hardware executing corresponding software. The hardware or the software includes one or more modules corresponding to the function. In a possible design, the communication apparatus includes a processing module and a transceiver module. The transceiver module is configured to receive information for configuring a first frequency domain resource and a second frequency domain resource. The processing module is configured to determine the first frequency domain resource and the second frequency domain resource based on the information received by the transceiver module, where the first frequency domain resource corresponds to a frame structure A, the second frequency domain resource corresponds to a frame structure B, and the frame structure A is different from the frame structure B. The transceiver module is configured to perform first transmission on the first frequency domain resource and/or the second frequency domain resource. The first frequency domain resource and the second frequency domain resource are two different bandwidth parts BWPs on a first component carrier CC, the first frequency domain resource and the second frequency domain resource are two different subbands in a first BWP, or the first frequency domain resource and the second frequency domain resource are different CCs. These modules may perform corresponding functions in the method example in the first aspect. For details, refer to the detailed descriptions in the method example. Details are not described herein again.

According to a sixth aspect, a communication apparatus is provided. For beneficial effects, refer to the descriptions of the second aspect. Details are not described herein again. The communication apparatus has a function of implementing behavior in the method example in the second aspect. The function may be implemented by hardware, or may be implemented by hardware executing corresponding software. The hardware or the software includes one or more modules corresponding to the function. In a possible design, the communication apparatus includes a processing module and a transceiver module. The processing module is configured to determine a first frequency domain resource and a second frequency domain resource, where the first frequency domain resource corresponds to a frame structure A, the second frequency domain resource corresponds to a frame structure B, and the frame structure A is different from the frame structure B. The transceiver module is configured to: send information for configuring the first frequency domain resource and the second frequency domain resource, and perform first transmission on the first frequency domain resource and/or the second frequency domain resource that are/is determined by the processing module. The first frequency domain resource and the second frequency domain resource are two different bandwidth parts BWPs on a first component carrier CC, the first frequency domain resource and the second frequency domain resource are two different subbands in a first BWP, or the first frequency domain resource and the second frequency domain resource are different CCs. These modules may perform corresponding functions in the method example in the second aspect. For details, refer to the detailed descriptions in the method example. Details are not described herein again.

According to a seventh aspect, a communication apparatus is provided. For beneficial effects, refer to the descriptions of the third aspect. Details are not described herein again. The communication apparatus has a function of implementing behavior in the method example in the third aspect. The function may be implemented by hardware, or may be implemented by hardware executing corresponding software. The hardware or the software includes one or more modules corresponding to the function. In a possible design, the communication apparatus includes a processing module and a transceiver module. The transceiver module is configured to receive configuration information for configuring a third frequency domain resource set. The processing module is configured to determine the third frequency domain resource set, where the third frequency domain resource set includes at least two frequency domain resources. The transceiver module is configured to receive first information. The processing module is configured to determine, based on the first information, a number of a frequency domain resource associated with each time unit in a first time unit set for a terminal device, where the associated frequency domain resource belongs to the third frequency domain resource set, the first time unit set includes N time units, and N is a positive integer greater than or equal to 2. The transceiver module is configured to support the apparatus in communicating with a network device. These modules may perform corresponding functions in the method example in the third aspect. For details, refer to the detailed descriptions in the method example. Details are not described herein again.

According to an eighth aspect, a communication apparatus is provided. For beneficial effects, refer to the descriptions of the fourth aspect. Details are not described herein again. The communication apparatus has a function of implementing behavior in the method example in the fourth aspect. The function may be implemented by hardware, or may be implemented by hardware executing corresponding software. The hardware or the software includes one or more modules corresponding to the function. In a possible design, the communication apparatus includes a processing module and a transceiver module. The processing module is configured to determine a third frequency domain resource set, where the third frequency domain resource set includes at least two frequency domain resources. The transceiver module is configured to send configuration information for the third frequency domain resource set to a terminal device. The processing module is configured to determine first information, where the first information indicates a number of a frequency domain resource associated with each time unit in a first time unit set for the terminal device, the associated frequency domain resource belongs to the third frequency domain resource set, the first time unit set includes N time units, and N is a positive integer greater than or equal to 2. The transceiver module is configured to send the first information to the terminal device. These modules may perform corresponding functions in the method example in the fourth aspect. For details, refer to the detailed descriptions in the method example. Details are not described herein again.

According to a ninth aspect, a communication apparatus is provided. The communication apparatus may be the terminal device in the foregoing method embodiments, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a tenth aspect, a communication apparatus is provided. The communication apparatus may be the network device in the foregoing method embodiments, or may be a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to an eleventh aspect, a computer program product is provided. The computer program product includes computer program code. When the computer program code is run, the methods performed by the terminal device in the foregoing aspects are performed.

According to a twelfth aspect, a computer program product is provided. The computer program product includes computer program code. When the computer program code is run, the methods performed by the network device in the foregoing aspects are performed.

According to a thirteenth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete device.

According to a fourteenth aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete device.

According to a fifteenth aspect, this application provides a computer-readable storage medium. The computer-readable storage medium stores a computer program. When the computer program is run, the methods performed by the terminal device in the foregoing aspects are implemented.

According to a sixteenth aspect, this application provides a computer-readable storage medium. The computer-readable storage medium stores a computer program. When the computer program is run, the methods performed by the network device in the foregoing aspects are implemented.

According to a seventeenth aspect, this application provides a communication system, including the communication apparatuses in the fifth aspect and the sixth aspect, or the apparatuses in the seventh aspect and the eighth aspect, or the communication apparatuses in the ninth aspect and the tenth aspect.

### BRIEF DESCRIPTION OF DRAWINGS

FIG. 1 is a schematic diagram of an applicable communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic diagram of a structure of a communication apparatus according to an embodiment of this application; and
FIG. 6 is a schematic diagram of a structure of another communication apparatus according to an embodiment of this application.

### DESCRIPTION OF EMBODIMENTS

Technical solutions in embodiments of this application may be applied to various communication systems, for example, a long term evolution (long term evolution, LTE) system, a 5G mobile communication system, and a future mobile communication system.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to a similar technical problem.

Embodiments of this application may be applied to a time division duplex (time division duplex, TDD) scenario, and may also be applied to a frequency division duplex (frequency division duplex, FDD) scenario.

In embodiments of this application, a new radio (New Radio, NR) network scenario in a wireless communication network is used as an example to describe some scenarios. It should be noted that the solutions in embodiments of this application may further be applied to another wireless communication network, and a corresponding name may also be replaced with a name of a corresponding function in the another wireless communication network.

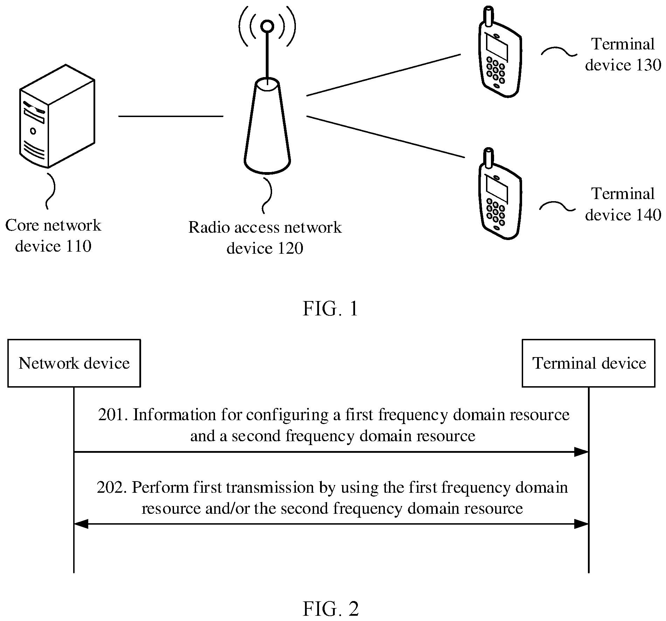

FIG. 1 is a schematic diagram of an architecture of a mobile communication system to which an embodiment of this application is applied. As shown in FIG. 1, the mobile communication system includes a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be different physical devices independent of each other, or functions of the core network device and logical functions of the radio access network device may be integrated into a same physical device, or a part of functions of the core network device and a part of functions of the radio access network device may be integrated into one physical device. The terminal device may be at a fixed position, or may be mobile. FIG. 1 is only a schematic diagram. The communication system may further include another network device, for example, may further include a wireless relay device and a wireless backhaul device, which are not shown in FIG. 1. Quantities of core network devices, radio access network devices, and terminal devices included in the mobile communication system are not limited in this embodiment of this application.

The radio access network device is an access device that is used by the terminal device to access the mobile communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. Alternatively, the radio access network device may be a module or a unit that completes a part of functions of a base station, for example, may be a central unit (central unit, CU) or a distributed unit (distributed unit, DU). A specific technology and a specific device form that are used by the radio access network device are not limited in embodiments of this application. In this application, the radio access network device is referred to as a network device for short. Unless otherwise specified, network devices are all radio access network devices.

The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application.

In embodiments of this application, an apparatus configured to implement a function of the terminal may be a terminal device, or may be an apparatus, for example, a chip system, that can support the terminal device in implementing the function. The apparatus may be installed in the terminal device. In embodiments of this application, the chip system may include a chip, or may include a chip and another discrete device. In embodiments of this application, the technical solutions provided in embodiments of this application are described by using an example in which the apparatus configured to implement the function of the terminal device is the terminal device.

The network device and the terminal device may be deployed on land, including an indoor or outdoor device, a handheld device, or a vehicle-mounted device; may be deployed on a water surface; or may be deployed on aircraft, balloons, and artificial satellites in the air. An application scenario of the network device and the terminal device is not limited in embodiments of this application.

The network device and the terminal device may communicate with each other by using a licensed spectrum (licensed spectrum), may communicate with each other by using an unlicensed spectrum (unlicensed spectrum), or may communicate with each other by using both a licensed spectrum and an unlicensed spectrum. The network device and the terminal device may communicate with each other by using a spectrum sub-6 gigahertz (gigahertz, GHz), or may communicate with each other by using a spectrum above 6 GHz, or may communicate with each other by using both a spectrum sub-6 GHz and a spectrum above 6 GHz. A spectrum resource used between the network device and the terminal device is not limited in embodiments of this application.

In embodiments of this application, a time-domain symbol may be an orthogonal frequency division multiplexing (orthogonal frequency division multiplexing, OFDM) symbol, or may be a single carrier-frequency division multiplexing (single carrier-frequency division multiplexing, SC-FDM) symbol. Unless otherwise specified, symbols in embodiments of this application are all time-domain symbols.

It may be understood that, in embodiments of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely used as examples of a downlink data channel, a downlink control channel, an uplink control channel, and an uplink data channel. These channels may have different names in different systems and different scenarios. This is not limited in embodiments of this application.

The following describes some related technical features in embodiments of this application.

A low-latency requirement of a URLLC service imposes an extremely high latency requirement on data communication. However, when uplink-downlink switching is performed by using a TDD frequency domain resource with a fixed frame structure, a waiting latency of a data transmission occasion is increased due to a switching latency problem. For example, a motion control (motion control) service has an extremely low-latency requirement (for example, round-trip time of 1 ms, that is, a unidirectional air interface latency of 0.5 ms) and an extremely high-reliability requirement (for example, reliability of 99.9999% to 99.9999999%). However, a typical frame structure in an existing C-band is a 30 kHz subcarrier spacing (subcarrier space, SCS) and a 3D:1S:1U or 7D:1S: 2U frame structure, in other words, a downlink-uplink switching periodicity is 2.5 ms or 5 ms, which obviously cannot meet a communication transmission requirement of 1 ms.

To meet the communication transmission requirement of 1 ms or a unidirectional transmission latency requirement of 0.5 ms, a sub-slot-level frame structure is currently introduced. However, sub-slot-level uplink-downlink switching and transmission inevitably cause greater switching overheads and pilot/control overheads, which is extremely unfavorable to a normal uplink large-capacity or downlink large-capacity service. Therefore, how to design an appropriate spectrum and an appropriate frame structure in a hybrid service deployment scenario is a key technology for future industrial automation applications.

The following briefly describes nouns that need to be used in embodiments of this application.

### 1. Spectrum

Spectrum usage in NR is classified into a plurality of levels, which are sequentially a frequency band (band), a component carrier (component carrier, CC), a bandwidth part (bandwidth part, BWP), a subband (subband, SB), a resource block (resource block, RB), and a subcarrier (subcarrier, SC). The following separately describes spectrums used in NR.

Band: The band is defined by the International Telecommunication Union (International Telecommunication Union, ITU). For example, a band n78 corresponds to 3.3 GHz to 3.8 GHz, a total of 500 MHz frequency band, and can only be in a TDD mode. In a communication system, bandwidths of most radio frequency filters are in a unit of a band. In other words, signals of different frequency domain resources in one band cannot be filtered by a radio frequency filter, and intra-band (Intra-Band) interference is caused.

CC: The CC is a basic unit of a spectrum deployed by an operator. For example, one band may include one or more CCs, one CC corresponds to a segment of frequency domain resource in frequency domain, and the frequency domain resource may include a start position and a bandwidth. For example, the bandwidth may be 100 MHz, 80 MHz, 40 MHz, 20 MHz, 10 MHz, or 5 MHz, and guard bands (guard bands) may be included on two sides of the bandwidth. It should be noted that, currently, in LTE and NR, a frame structure is configured by using a CC as a unit. To be specific, when a dynamic TDD frame structure is not considered, a TDD frame structure on one CC is fixed, and TDD frame structures of different CCs may be different. In addition, in LTE and NR, a terminal device usually supports carrier aggregation (at least downlink carrier aggregation), that is, supports information sending and receiving on a plurality of component carriers. When the terminal device needs to receive and send information on different component carriers, the terminal device may directly select a corresponding component carrier, and CC switching is not used. Therefore, there is no switching latency. However, different component carriers CCs have different HARQ entities, that is, have different HARQ processes. Therefore, cross-CC HARQ combination cannot be supported, that is, initial transmission and retransmission of data transmission cannot be supported on different CCs, and the terminal device cannot perform joint decoding on initial transmission and retransmission.

BWP: One CC may include one or more BWPs, and the BWP has the following characteristics:
- Different BWPs may support different subcarrier spacings, so that different services canbe matched.
- A plurality of BWPs may share a center frequency and have different bandwidths. This mechanism enables the terminal device to work in different bandwidths based on service requirements, to save power.
- Different BWPs have different bandwidths, and the terminal device may be allowed to select a BWP based on a capability of the terminal device, so that the terminal device obtains more degrees of freedom in designs.

Currently, a network device may reserve a specific resource to serve as a guard band between two adjacent BWPs. In addition, subcarrier spacings of different BWPs may be different. In other words, a subcarrier spacing is configured by using a BWP as a unit. The BWP corresponds to a segment of frequency domain position on a CC in frequency domain, a start position of the BWP is included in a frequency domain range of the CC, and a bandwidth may include a plurality of RBs. In addition, NR currently does not support simultaneous activation of a plurality of BWPs. To be specific, only one of a plurality of BWPs on one CC can be in an active state at a same moment. If the terminal device needs to receive and send information in different BWPs, BWP switching needs to be performed first. There is a specific switching latency, and a specific processing latency is caused for information sending and receiving. However, the plurality of BWPs on one CC share one HARQ entity. Therefore, although BWP switching causes the switching latency, HARQ combination is naturally supported for initial transmission and retransmission in different BWPs on one CC.
- Subband SB: One BWP includes a plurality of SBs, and one SB includes one or more RBs. For example, in this application, the SB may indicate a segment of consecutive frequency domain resources.
- Resource block RB and subcarrier SC: One RB includes 12 consecutive SCs, and one SC is a smallest frequency domain resource unit in LTE and NR systems, and may be used to carry one modulation symbol.

### 2. Frame structure

In this application, the frame structure may include an NR time domain structure and a TDD frame structure. Details are as follows:

NR time domain structure: A transmission unit of an NR time domain resource may be a frame, a subframe, a slot, or a symbol. A length of the frame is fixed at 10 ms, and a length of the subframe is fixed at 1 ms. Lengths of the slot and the symbol are related to a subcarrier spacing. One slot includes 14 symbols (normal cyclic prefix) or 12 symbols (extended cyclic prefix). Assuming that the subcarrier spacing is SCS= 2^{µ} × 15 kHz, one subframe subframe includes 2*^{µ}* slots Slot, where *µ* is a carrier spacing index (SCS index), and a value may be 0, 1, 2, or 3.

TDD frame structure: A unit of the TDD frame structure in NR may be a symbol. The symbol may include a downlink symbol D, an uplink symbol U, and a flexible symbol X (or a flexible symbol S). The flexible symbol may be used for DL-UL switching, and may also be used for DL transmission and/or UL transmission. The TDD frame structure is usually represented as "xD:yS:zU", indicating that one uplink-downlink switching periodicity includes x consecutive downlink slots, y flexible slots, and z consecutive uplink slots. The flexible slot may include at least one of a downlink symbol, a flexible symbol, or an uplink symbol. The TDD frame structure may further use "aD:bS:cU" to indicate that one flexible slot includes a consecutive downlink symbols, b flexible symbols, and c consecutive uplink symbols.

To implement hybrid service deployment in a factory and enable different services to match different frame structures, a current spectrum use policy in a factory includes: intra-factory communication and an outdoor macro base station may share a spectrum, or a separate spectrum is used for intra-factory communication, or intra-factory communication is performed jointly by using an outdoor macro base station spectrum F1 and a new spectrum F2.

For example, when a separate spectrum is used for intra-factory communication, a spectrum F2 may be used in a factory, and a spectrum F1 may be used for an outdoor macro base station, where F1 and F2 may be located in a same band and frequency domains do not overlap, or F1 and F2 may be located in different bands. For example, China Telecom deploys a 100 MHz spectrum of 3.4 GHz to 3.5 GHz in a C-band outdoors, and China Unicom deploys a 100 MHz spectrum of 3.5 GHz to 3.6 GHz in the C-band outdoors, and can use a 100 MHz industrial spectrum of 3.3 GHz to 3.4 GHz in the C-band indoors. On the F2, the following manners are used to support a hybrid service:

Manner 1: A TDD frame structure is designed based on a plurality of service requirements. However, a URLLC service requires a short transmission latency, and requires frequent switching of data transmission between uplink transmission and downlink transmission. Consequently, switching overheads are increased.

Manner 2: The spectrum F2 is divided into a plurality of subbands, different services use different subbands, and different subbands use different frame structures. In this case, it is set that one service occupies one subband, which easily causes problems of spectrum fragments and low resource utilization.

Manner 3: The spectrum F2 is divided into two subbands, a subband 1 is used to process a DL service, and a subband 2 is used to process a UL service. In this manner, a TDD complementary frame structure may be implemented. A specific case is similar to that of complementarity between the spectrum F1 and the spectrum F2 described below.

A manner of jointly using the spectrum F1 and the spectrum F2 is used for intra-factory communication. Because a TDD frame structure of the spectrum F1 is already fixed, for example, may be 7D:1S:2U, the same frame structure is retained for intra-factory communication on the spectrum F1, but an opposite frame structure, that is, 2D:1S:7U, is deployed on the spectrum F2. In this manner, a TDD complementary frame structure of the spectrum F1 and the spectrum F2 is formed in an intra-factory communication system, to achieve an effect similar to that of FDD. A downlink large-capacity service and an uplink large-capacity service may be respectively deployed on the spectrum F1 and the spectrum F2, and a URLLC service is performed by switching between the spectrum F1 and the spectrum F2. By using this setting, transmission efficiency on FDD can be improved, and a switching waiting latency can be reduced.

When the spectrum F1 and the spectrum F2 correspond to two CCs in two bands, or correspond to two BWPs in two bands, because different bands have different radio frequency filters, a problem of mutual impact of radio frequency filtering can be resolved. However, few operators can obtain spectrums of two bands.

When the spectrum F1 and the spectrum F2 correspond to two or more CCs in one band, using two CCs as an example, a terminal device may be configured to support carrier aggregation (Carrier Aggregation, CA), that is, support simultaneous information receiving and/or information sending on the two CCs. Currently, a protocol does not support initial transmission on one CC and retransmission on the other CC. In addition, for a HARQ-ACK feedback for downlink data transmission, the HARQ-ACK feedback can only be transmitted on a fixed CC currently, and the protocol does not support dynamic switching of the CC on which HARQ-ACK transmission is performed. Finally, the terminal device that transmits a URLLC service essentially sends or receives data on only one CC at a moment. Therefore, a parallel processing capability of the two CCs is wasted.

When the spectrum F1 and the spectrum F2 correspond to two or more BWPs on one CC, first, in a current protocol, a TDD frame structure is configured by using a CC as a unit, and a TDD frame structure is not supported to be configured at a BWP level. Then, the current protocol does not support a solution in which a plurality of BWPs are simultaneously activated. To avoid introducing a waiting latency, switching between different BWPs needs to be performed for URLLC communication. However, a BWP switching latency is large, and therefore a waiting latency for URLLC data transmission is increased accordingly.

When the spectrum F1 and the spectrum F2 correspond to two spectrum segments in one BWP, for example, may be a subband subband #1 and a subband subband #2, on one aspect, a current protocol does not support a frame structure configuration at a subband level, and in another aspect, positions and bandwidths of the subband #1 and the subband #2 dynamically change. Consequently, it is difficult for the terminal device to adjust filter analog components in real time to match the subbands. If operating bandwidths of these analog components are an entire BWP, contradirectional interference between the two subbands cannot be eliminated. The contradirectional interference refers to "interference caused by downlink transmission of a base station A to uplink receiving of a base station B" or "interference caused by uplink transmission of a terminal A to downlink receiving of a terminal B". Codirectional interference corresponding to the contradirectional interference refers to "interference caused by the downlink transmission of the base station A to downlink transmission of the base station B (that is, the downlink receiving of the terminal B)" or "interference caused by the uplink transmission of the terminal A to uplink transmission of the terminal B (that is, the uplink receiving of the base station B)".

To resolve the foregoing problems of how to configure a frequency domain resource in a dual-frequency frame structure with different configurations and how to support cross-frequency-domain-resource retransmission and fast switching, this application provides a communication method, to resolve a problem that in a dual-spectrum scenario, different frame structures are configured for different frequency domain resources, and the terminal device performs fast switching and retransmission combination between different frequency domain resources.

For ease of description, in the following embodiments, a first time domain resource and a second time domain resource are used as an example for description in embodiments of this application. However, embodiments of the present invention may be applied to a scenario of two or more frequency domain resources. Correspondingly, the two or more frequency domain resources may respectively correspond to two or more frame structures. This is not specifically limited in this application. It should be understood that a relationship between a first frequency domain resource and a second frequency domain resource in the following embodiments may include the following several types:
- the first frequency domain resource and the second frequency domain resource are located in two different bands, for example, may be two CCs, two BWPs, or two subbands in the two different bands; or
- the first frequency domain resource and the second frequency domain resource are located in a same band, for example, may be two different CCs in one band, two different BWPs on one CC, or two different subbands in one BWP.

Concepts of the band, the CC, the BWP, and the subband are described above. The relationship between the first frequency domain resource and the second frequency domain resource is merely an example for better understanding of the technical solutions of this application. This application includes but is not limited to the foregoing example.

In embodiments of this application, transmission includes uplink transmission and downlink transmission. For the uplink transmission, a terminal device sends signaling, data, or a signal to a network device, and the network device receives the signaling, the data, or the signal from the terminal device. For the downlink transmission, the network device sends signaling, data, or a signal to the terminal device, and the terminal device receives the signaling, the data, or the signal from the network device. For a transmitting end, performing transmission refers to sending; and for a receiving end, performing transmission refers to receiving.

In embodiments of this application, a function of the network device may alternatively be performed by a module (such as a chip) in the network device, or may be performed by a control subsystem including the function of the network device. The control subsystem including the function of the network device herein may be a control center in industrial internet of things application scenarios such as a smart grid, factory automation, and intelligent transportation. A function of the terminal device may alternatively be performed by a module (such as a chip) in the terminal device. FIG. 2 is a schematic flowchart of a communication method according to an embodiment of this application.

201. A network device sends information for configuring a first frequency domain resource and a second frequency domain resource to a terminal device, where the first frequency domain resource corresponds to a frame structure A, the second frequency domain resource corresponds to a frame structure B, and the frame structure A is different from the frame structure B. Correspondingly, the terminal device receives the information.

Optionally, the terminal device may determine the first frequency domain resource and the second frequency domain resource based on the information.

For example, a periodicity of the frame structure A is the same as a periodicity of the frame structure B, to reduce configuration overheads of the frame structure A and the frame structure B. For example, configuration periodicities of both the frame structure A and the frame structure B are 5 ms.

For example, the frame structure A and the frame structure B not only have the same periodicity, but also are a first complementary frame structure. For example, a downlink symbol of the frame structure A corresponds to an uplink symbol of the frame structure B, an uplink symbol of the frame structure A corresponds to a downlink symbol of the frame structure B, and a flexible symbol of the frame structure A corresponds to a flexible symbol of the frame structure B.

For example, the frame structure A and the frame structure B may be a second complementary frame structure. For example, a downlink symbol of the frame structure A corresponds to an uplink symbol or a flexible symbol of the frame structure B, and/or an uplink symbol of the frame structure A corresponds to a downlink symbol or a flexible symbol of the frame structure B; or a downlink symbol or a flexible symbol of the frame structure A corresponds to an uplink symbol of the frame structure B, and/or an uplink symbol or a flexible symbol of the frame structure A corresponds to a downlink symbol of the frame structure B.

For example, the frame structure A and the frame structure B may be a third complementary frame structure. For example, a downlink slot of the frame structure A corresponds to an uplink slot of the frame structure B, an uplink slot of the frame structure A corresponds to a downlink slot of the frame structure B, and a flexible slot of the frame structure A corresponds to a flexible slot of the frame structure B.

It should be understood that the foregoing first, second, or third complementary frame structure is used, so that the terminal device processing a URLLC service has a downlink resource and an uplink resource on any symbol (or in any slot), and therefore may perform downlink transmission and uplink transmission based on a requirement without increasing an additional waiting latency.

202. The terminal device performs first transmission with the network device by using the first frequency domain resource and/or the second frequency domain resource.

For example, the first transmission includes downlink transmission or uplink transmission. In this application, the downlink transmission may include transmission of at least one of the following: a PDCCH, a PDSCH, a channel state information reference signal (channel state information reference signal, CSI-RS), a downlink synchronization signal, or a physical broadcast channel (physical broadcast channel, PBCH). The uplink transmission may include transmission of at least one of the following: a PUSCH, a PUCCH, a sounding reference signal (sounding reference signal, SRS), or a physical random access channel (physical random access channel, PRACH). The PUCCH may carry at least one of a scheduling request (scheduling request, SR), a hybrid automatic repeat request-acknowledgment (hybrid automatic repeat request-acknowledgment, HARQ-ACK), or CSI. PDSCH transmission may be initial transmission or HARQ retransmission of downlink data, and PUSCH transmission may be initial transmission or HARQ retransmission of uplink data.

For example, the terminal device supports simultaneous information sending and receiving on a plurality of frequency domain resources. In this case, the network device may configure/indicate both the first frequency domain resource and the second frequency domain resource to be in an active state, that is, indicate the terminal device to simultaneously prepare to send or receive information on the first frequency domain resource and the second frequency domain resource. For example, the first frequency domain resource and the second frequency domain resource are two CCs in one band, and the terminal supports carrier aggregation on the two CCs. For another example, the first frequency domain resource and the second frequency domain resource are two BWPs on one CC, and the terminal supports simultaneous activation of the two BWPs.

Alternatively, if the terminal device does not support simultaneous information sending and receiving on a plurality of frequency domain resources, switching may be supported on the first frequency domain resource and the second frequency domain resource. In other words, the network device indicates, to the terminal device, a target frequency domain resource on which the first transmission is performed, and the terminal device switches to the target frequency domain resource on which the first transmission is performed and then performs the first transmission. For example, the first frequency domain resource and the second frequency domain resource are two BWPs on one component carrier, and the terminal device does not support simultaneous activation of the two BWPs.

To better understand the technical solution of this application, the following uses two frequency domain resources as an example to describe "the terminal device does not support simultaneous information sending and receiving on at least two frequency domain resources" from different perspectives.

The first frequency domain resource and the second frequency domain resource may correspond to one digital processing unit, and correspond to two independent analog channels. Each analog channel includes at least one of an automatic gain controller, a frequency mixer, a baseband analog filter, a digital-to-analog/analog-to-digital converter, or the like. Correspondingly, because the first frequency domain resource and the second frequency domain resource are separately associated with one independent analog channel, the terminal device supports latency-free (or extremely low-latency) switching on the first frequency domain resource and the second frequency domain resource. Because the first frequency domain resource and the second frequency domain resource share one digital processing unit, processing of received and sent signals on the two frequency domain resources cannot be supported simultaneously. Consequently, data cannot be sent or received simultaneous on the first frequency domain resource and the second frequency domain resource.

On a terminal device side, the first frequency domain resource and the second frequency domain resource correspond to one digital processing unit and one analog channel. In other words, the terminal device can send and receive a signal only on the first frequency domain resource or the second frequency domain resource at a same moment, and an analog channel parameter needs to be adjusted for switching between frequency domain resources. The analog channel parameter may be at least one of a frequency mixer frequency, a baseband analog filter bandwidth, or digital-to-analog/analog-digital converter resolution. As a result, switching of the terminal device on the first frequency domain resource and the second frequency domain resource requires a specific switching latency. It should be understood that, on the terminal device side, when the first frequency domain resource and the second frequency domain resource correspond to one digital processing unit and one analog channel, because the first frequency domain resource and the second frequency domain resource have some same parameter configurations, for example, the first frequency domain resource and the second frequency domain resource meet at least one of the following relationships: a frequency domain position of the first frequency domain resource does not overlap a frequency domain position of the second frequency domain resource; a frequency domain width of the first frequency domain resource is the same as a frequency domain width of the second frequency domain resource; or a subcarrier spacing of the first frequency domain resource is the same as a subcarrier spacing of the second frequency domain resource, so that time required for adjusting the analog channel parameter can be reduced to a maximum extent, and a switching latency between the first frequency domain resource and the second frequency domain resource can be reduced.

For example, before step 202, this embodiment may further include: The terminal device determines, based on the target frequency domain resource and a frequency domain resource on which the terminal device is currently located, whether switching between different frequency domain resources needs to be performed.

It should be understood that if the terminal device has independent processing entities on the first frequency domain resource and the second frequency domain resource, for example, independent analog channels and calculation processing units, the terminal device may perform joint sending and receiving on the first frequency domain resource and the second frequency domain resource, and determine that switching between different frequency domain resources does not need to be performed.

It should be understood that when the first frequency domain resource and the second frequency domain resource share one processing entity, or share one analog channel, switching between different frequency domain resources requires the terminal device to adjust some processing parameters. The processing parameters are, for example, the frequency mixer frequency, the filter bandwidth, or a sampler rate described above.

For example, when the target frequency domain resource is different from the frequency domain resource on which the terminal device is currently located, the terminal device determines that frequency domain resource switching needs to be performed.

When the current frequency domain resource is the first frequency domain resource and the target frequency domain resource is the second frequency domain resource, or when the current frequency domain resource is the second frequency domain resource and the target frequency domain resource is the first frequency domain resource, the terminal device determines that the switching latency is a first latency T1. When the current frequency domain resource is a fifth frequency domain resource and the target frequency domain resource is the first frequency domain resource or the second frequency domain resource, or when the current frequency domain resource is the first frequency domain resource or the second frequency domain resource and the target frequency domain resource is a fifth frequency domain resource, where the fifth frequency domain resource does not belong to a first frequency domain resource set, the terminal device determines that the switching latency is a second switching latency T2.

Further, if the terminal device determines that frequency domain resource switching needs to be performed, the terminal device determines a first time length.

For example, when the first transmission is dynamic scheduling transmission, the first time length is a time length from a start moment of a start symbol of DCI or an end moment of an end symbol of the DCI to a start moment of a start symbol of the first transmission, where the DCI carries indication information of a frequency domain resource or a time domain resource.

For example, when the first transmission is the first time of transmission of a semi-persistent scheduling (semi-persistent scheduling, SPS) PDSCH or a type-2 (Type-2) configured grant (configured grant, CG) PUSCH (where the type-2 indicates that after the CG PUSCH is configured, the CG PUSCH needs to be activated by using DCI before uplink data transmission can be performed), the first time length is a time length from a start moment of a start symbol of activated DCI for the SPS PDSCH or the type-2 CG PUSCH or an end moment of an end symbol of the DCI to a start moment of a start symbol of the first transmission.

For example, when the first transmission is the non-first time of transmission of an SPS PDSCH or a type-2 CG PUSCH or transmission configured by a higher layer (for example, a type-1 CG PUSCH, a periodic CSI-RS, periodic CSI, or a periodic SRS), that is, the first transmission is periodic transmission, the first time length is a time length from a start moment of a start symbol or an end moment of an end symbol in previous transmission of the first transmission to a start moment of a start symbol in current transmission of the first transmission.

It should be specially noted that when the first time length is greater than or equal to a specified switching latency T0, the terminal device sends/receives the first transmission on the target frequency domain resource; when the first time length is less than a specified switching latency T0, the terminal device does not send/receive the first transmission on the first frequency domain resource. T0 is a minimum switching latency of the terminal device switching between different frequency domain resources, and a value of T0 is T1 or T2 based on a relationship between the fifth frequency domain resource and the first/second frequency domain resource.

Further, if the terminal device determines that switching between different frequency domain resources needs to be performed, and the terminal device performs the first transmission on the target frequency domain resource, the terminal device adjusts an analog channel parameter and/or a digital processing parameter, such as the frequency mixer frequency, the baseband filter bandwidth, the sampler rate, and an FFT/IFFT size, based on configuration information (such as a frequency domain position and width, and a subcarrier spacing) of the target frequency domain resource, and the terminal device sends/receives the first transmission on the target frequency domain resource.

For example, after the network device sends the information for configuring the first frequency domain resource and the second frequency domain resource to the terminal device in step 201, the embodiment may further include: The network device sends first configuration information to the terminal device, where the first configuration information indicates the first frequency domain resource set and a second frequency domain resource set. The terminal device receives the first configuration information. The first frequency domain resource and the second frequency domain resource belong to the first frequency domain resource set, and a third frequency domain resource belongs to the second frequency domain resource set.

For example, the network device configures N frequency domain resource sets, for example, N BWP sets, for the terminal device by using the first configuration information, where one frequency domain resource set (for example, the first frequency domain resource set) includes the first frequency domain resource and the second frequency domain resource, and another frequency domain resource set (for example, the second frequency domain resource set) includes the third frequency domain resource. All frequency domain resources are grouped into a plurality of sets, and frequency domain resources in a same set have some same parameter configurations, to reduce a switching latency between different frequency domain resources in the same set. In this way, the network device may determine a switching latency required for the terminal device switching between different frequency domain resources, to select an appropriate scheduling latency for different frequency domain resource switching behaviors (switching within a set or switching between sets) when scheduling the first transmission, to ensure that the terminal device has sufficient time to perform switching processing and subsequent sending and receiving processing.

For example, a switching latency (that is, the first switching latency T1) of switching from the first frequency domain resource to the second frequency domain resource is less than a switching latency (that is, the second switching latency T2) of switching from the second frequency domain resource to the third frequency domain resource. For example, the N frequency domain resource sets configured by the network device meet the following features: A switching latency of switching between a plurality of frequency domain resources in one set is T1, a switching latency of switching between two frequency domain resources in different frequency domain resource sets is T2, and T1<T2 is met.

It should be specially noted that the first switching latency T1 and the second switching latency T2 may alternatively be indicated by the network device to the terminal device by using signaling or predefined in a protocol, and the first switching latency T1<the second switching latency T2 is met. The first switching latency T1=0, or the first switching latency T1=1 symbol, or the first switching latency T1=2 symbols, or the first switching latency is equal to a latency, for example, 10 µs, of the terminal device switching from a sending active state to a sending inactive state, or the first switching latency is equal to twice a latency, for example, 20 µs, of the terminal device switching from a sending active state to a sending inactive state. Optionally, the second switching latency T2 is related to the subcarrier spacing and a capability of the terminal device (such as UE). For example, for a terminal device with a strong capability, the second switching latency T2 is 1 ms (for the SCS 15 kHz and 30 kHz) or 0.75 ms (for the SCS 60 kHz and 120 kHz). Optionally, a switching latency that corresponds to switching from a source frequency domain resource to the target frequency domain resource and that is determined by the terminal device is T1 or T2.

For example, before step 202, the network device indicates a frequency domain position (for example, a resource block RB set) or a time domain position (for example, a time domain OFDM slot and a symbol set) corresponding to the first transmission to the terminal device in the following manner. Correspondingly, the terminal device determines the frequency domain position or the time domain position corresponding to the first transmission. Before determining the frequency domain position corresponding to the first transmission, the terminal device needs to first determine the target frequency domain resource on which the first transmission is performed. The target frequency domain resource may be the first frequency domain resource or the second frequency domain resource. In this method, the terminal device first determines the target frequency domain resource, and may adjust some transceiver channel parameters based on the target frequency domain resource, to better implement the first transmission, and minimize interference caused by the first transmission to transmission on another frequency domain resource.

The network device may indicate the target frequency domain resource by using any one of the following examples.

In an example, the network device directly indicates the target frequency domain resource. The network device may send target frequency domain resource indication information to the terminal device. Correspondingly, the terminal device determines, based on the target frequency domain resource indication information, the target frequency domain resource corresponding to the first transmission, where the target frequency domain resource is the first frequency domain resource or the second frequency domain resource.

For example, the network device sends the target frequency domain resource indication information to the terminal device, where the indication information includes second indication information and third indication information, the second indication information explicitly indicates the target frequency domain resource, and the third indication information indicates an RB position of the first transmission in the target frequency domain resource. The network device separately indicates the target frequency domain resource and the RB position in the target frequency domain resource. An indication method is simple and has backward compatibility. In addition, in the determined target frequency domain resource, overheads for indicating the RB position in the target frequency domain resource are low.

For another example, when the first transmission is at least one of a PDSCH dynamically scheduled by using DCI, a PUSCH dynamically scheduled by using DCI, HARQ-ACK transmission of a PDSCH dynamically scheduled by using DCI, aperiodic CSI-RS transmission dynamically triggered by using DCI, an aperiodic CSI feedback dynamically triggered by using DCI, or SRS transmission dynamically triggered by using DCI, the network device may further send DCI to the terminal device, where the target frequency domain resource indication information may be included in the DCI.

In an example, the target frequency domain resource indication information may include second indication information and third indication information, where the second indication information is a field H in the DCI, and the third indication information is a field J in the DCI. For example, if the first transmission is HARQ-ACK transmission of a PDSCH dynamically scheduled by using DCI, the DCI simultaneously schedules PDSCH transmission and HARQ-ACK transmission corresponding to a PDSCH, and a field H and a field J respectively indicate a target frequency domain resource on which the HARQ-ACK transmission is performed and an RB position of the HARQ-ACK transmission in the target frequency domain resource. Optionally, the field H may be an independent field, and only indicates the target frequency domain resource on which the HARQ-ACK transmission is performed. Optionally, the field H may be a field indicating a target frequency domain resource on which a PDSCH is located in existing DCI. In a DCI design, the field H may jointly indicate a target frequency domain resource (a downlink frequency domain resource) on which the PDSCH transmission is performed and the target frequency domain resource (an uplink frequency domain resource) on which the HARQ-ACK transmission is performed. For example, the first frequency domain resource and the second frequency domain resource are two BWPs on one CC. The field H may indicate a number of a BWP in which a HARQ-ACK feedback for data scheduled by using the DCI is located.

For another example, the first transmission in step 202 may be transmission configured by using radio resource control (radio resource control, RRC) signaling. For example, the first transmission may be type-1 configured grant PUSCH transmission (where a type-1 configured grant PUSCH means that a configured grant PUSCH can be transmitted without DCI activation after being configured), periodic CSI-RS transmission, a periodic CSI feedback, or periodic SRS transmission. The target frequency domain resource indication information may be included in the RRC signaling.

For another example, the first transmission in step 202 may be transmission that is configured by using RRC signaling and that needs to be dynamically activated by using DCI, for example, semi-persistent PDSCH transmission or type-2 configured grant PUSCH transmission (where a type-2 configured grant PUSCH means that a configured grant PUSCH can be transmitted only after being configured and activated by using DCI). The target frequency domain resource indication information may be included in the RRC signaling or the activation DCI.

In another example, the network device indirectly indicates the target frequency domain resource. The network device may send frequency domain position information of the first transmission to the terminal device. Correspondingly, the terminal device determines, based on the frequency domain position information, the target frequency domain resource corresponding to the first transmission. According to this method, both the target frequency domain resource corresponding to the first transmission and an RB of the first transmission in the target frequency domain resource can be indicated by using the frequency domain position information of the first transmission, to improve flexibility of indicating the frequency domain position of the first transmission.

For example, the network device sends, to the terminal device, information indicating the frequency domain position of the first transmission. When the frequency domain position is within a frequency domain range of the first frequency domain resource, the terminal device determines that the target frequency domain resource is the first frequency domain resource. When the frequency domain position is within a frequency domain range of the second frequency domain resource, the terminal device determines that the target frequency domain resource is the second frequency domain resource. Optionally, the frequency domain position of the first transmission may be indicated by using an RB set occupied by the first transmission, or may be indicated by using a frequency domain start position and a width of the first transmission.

For example, the first frequency domain resource and the second frequency domain resource may be two different BWPs on a first CC. The network device sends fifth indication information to the terminal device, where the fifth indication information indicates a frequency domain position of the first transmission on the first CC. The terminal device receives the fifth indication information, and determines a target frequency domain resource based on the frequency domain position. The target frequency domain resource is the first frequency domain resource or the second frequency domain resource.

For example, the first frequency domain resource and the second frequency domain resource correspond to a same subcarrier spacing, and the fifth indication information may indicate an RB position occupied by the first transmission on the first CC, for example, an occupied RB set, or a number of an occupied start RB and a quantity of consecutively occupied RBs.

Specifically, the first CC includes a first width B 1 Hz in frequency domain, and a start frequency of the first CC is used as a reference point. A start position of a first BWP in frequency domain is f1 Hz, and an occupied width is B2 Hz. A start position of a second BWP in frequency domain is f2 Hz, and an occupied width is B3 Hz. The fifth indication information indicates that a start position of the first transmission in frequency domain is f3 Hz and an end position of the first transmission in frequency domain is f4 Hz. Alternatively, the fifth indication information indicates that a start position of the first transmission in frequency domain is f3 Hz and a width of frequency domain resources consecutively occupied by the first transmission is B4 Hz (in this case, f4=f3+B4). When f2>f1+B2, that is, the first BWP and the second BWP do not overlap in frequency domain, if f1≤f3 and f4≤f1+B2, that is, the frequency domain position of the first transmission is within the first BWP, the target frequency domain resource is the first BWP; if f2≤f3 and f4≤f2+B3, that is, the frequency domain position of the first transmission is within the second BWP, the target frequency domain resource is the second BWP. When f1<f2<f1+B2, that is, the first BWP and the second BWP overlap in frequency domain, if f1≤f3 and f4≤f2, that is, the frequency domain position of the first transmission is in the first BWP but does not overlap the second BWP, the target frequency domain resource is the first BWP; if f1+B2≤f3 and f4≤f2+B3, that is, the frequency domain position of the first transmission is in the second BWP but does not overlap the first BWP, the target frequency domain resource is the second BWP; if f2≤f3 and f4≤f1+B2, that is, the frequency domain position of the first transmission on the first CC is in an overlapping frequency domain resource between the first BWP and the second BWP, the target frequency domain resource is a preset BWP. The preset BWP is predefined in the protocol or configured by the network device for the terminal device by using RRC signaling. Optionally, the foregoing start frequencies f1, f2, and f3 may be indicated by using RB numbers on the first CC.

For example, the first frequency domain resource and the second frequency domain resource are two different subbands in the first BWP, and the network device sends sixth indication information to the terminal device, where the sixth indication information indicates a frequency domain position of the first transmission in the first BWP. The terminal device receives the sixth indication information, and determines a target frequency domain resource based on the frequency domain position in the first BWP, where the target frequency domain resource is the first frequency domain resource or the second frequency domain resource.

For example, the sixth indication information may indicate an RB position occupied by the first transmission in the first BWP, and the RB position may be, for example, an RB set, or a number of a start RB and a quantity of consecutively occupied RBs.

Specifically, the first BWP includes a first width B1' Hz in frequency domain, and a start frequency of the first BWP is used as a reference point. A start position of a first SB in frequency domain is f1' Hz, and an occupied width is B2' Hz. A start position of a second SB in frequency domain is f2' Hz, and an occupied width is B3' Hz. The sixth indication information indicates that a start position of the first transmission in frequency domain is f3' Hz and an end position in frequency domain is f4' Hz. Alternatively, the sixth indication information indicates that a start position of the first transmission in frequency domain is f3' Hz and a width of frequency domain resources consecutively occupied by the first transmission is B4' Hz (in this case, f4'=f3'+B4'). When f2'>f1'+B2', that is, the first SB and the second SB do not overlap infrequency domain, if f1'≤f3' and f4'≤f1'+B2', that is, the frequency domain position of the first transmission is included in the first SB, the target frequency domain resource is the first SB; if f2'≤f3' and f4'≤f2'+B3', that is, the frequency domain position of the first transmission is in the second SB, the target frequency domain resource is the second SB. When f1'<f2'<f1'+B2', that is, the first SB and the second SB overlap in frequency domain, if f1'≤f3' and f4'≤f2', that is, the frequency domain position of the first transmission is in the first SB and does not overlap the second SB, the target frequency domain resource is the first SB; if f1'+B2'≤f3' and f4'≤f2'+B3', that is, the frequency domain position of the first transmission is in the second SB and does not overlap the first SB, the target frequency domain resource is the second SB; if f2'≤f3' and f4'≤f1'+B2', that is, the frequency domain position of the first transmission in the first BWP is in an overlapping frequency domain resource between the first SB and the second SB, the target frequency domain resource is a preset SB. The preset SB is predefined in the protocol or configured by the network device for the terminal device by using RRC signaling. Optionally, the foregoing start frequencies f1', f2', and f3' may be indicated by using RB numbers in the first BWP.

In another example, the network device indirectly indicates the target frequency domain resource. The network device may indicate time domain position information of the first transmission to the terminal device, and the terminal device determines, based on the time domain position information, the target frequency domain resource corresponding to the first transmission. In this method, the network device may implicitly indicate the target frequency domain resource by using the time domain position information, to reduce signaling overheads for indicating the target frequency domain resource.

For example, the network device may send fourth indication information to the terminal device, to indicate a time domain position for performing the first transmission. The time domain position includes a slot in which the first transmission is performed, and a start symbol and a quantity of consecutively occupied symbols in the slot. The terminal device determines the target frequency domain resource based on the time domain position, the frame structure A, and the frame structure B, where the target frequency domain resource is the first frequency domain resource or the second frequency domain resource.

For example, the frame structure A and the frame structure B are the first complementary frame structure described above. When the first transmission is uplink transmission, and the frame structure A and the frame structure B at the time domain position of the first transmission are flexible symbols, the target frequency domain resource is predefined in the protocol or configured in RRC signaling. When the first transmission is uplink transmission, the frame structure A at the time domain position is an uplink symbol, and the frame structure B is not an uplink symbol, the target frequency domain resource is the first frequency domain resource. When the first transmission is uplink transmission, the frame structure A at the time domain position is not an uplink symbol, and the frame structure B is an uplink symbol, the target frequency domain resource is the second frequency domain resource. When the first transmission is downlink transmission, and the frame structure A and the frame structure B at the time domain position are flexible symbols, the target frequency domain resource is predefined in the protocol or configured by using higher layer signaling. When the first transmission is downlink transmission, the frame structure A at the time domain position is a downlink symbol, and the frame structure B is not a downlink symbol, the target frequency domain resource is the first frequency domain resource. When the first transmission is downlink transmission, the frame structure A at the time domain position is not a downlink symbol, and the frame structure B is a downlink symbol, the target frequency domain resource is the second frequency domain resource.

It should be understood that the frame structure A and the frame structure B are the second complementary frame structure described above. When the first transmission is uplink transmission, and the frame structure A and the frame structure B at the time domain position of the first transmission are flexible symbols or uplink symbols, the target frequency domain resource is predefined in the protocol or configured by the network device for the terminal device by using RRC signaling. When the first transmission is uplink transmission, the frame structure A at the time domain position is an uplink symbol or a flexible symbol, and the frame structure B is a downlink symbol, the target frequency domain resource is the first frequency domain resource. When the first transmission is uplink transmission, the frame structure A at the time domain position is a downlink symbol, and the frame structure B is an uplink symbol or a flexible symbol, the target frequency domain resource is the second frequency domain resource. When the first transmission is downlink transmission, and the frame structure A and the frame structure B at the time domain position are flexible symbols or downlink symbols, the target frequency domain resource is predefined in the protocol or configured by the network device for the terminal device by using RRC signaling. When the first transmission is downlink transmission, the frame structure A at the time domain position is a downlink symbol or a flexible symbol, and the frame structure B is an uplink symbol, the target frequency domain resource is the first frequency domain resource. When the first transmission is downlink transmission, the frame structure A at the time domain position is an uplink symbol, and the frame structure B is a downlink symbol or a flexible symbol, the target frequency domain resource is the second frequency domain resource.

For example, an implementation of step 201 is: The network device sends information about a sixth frequency domain resource to the terminal device, where the sixth frequency domain resource includes the first frequency domain resource and the second frequency domain resource. Correspondingly, the terminal device receives the information about the sixth frequency domain resource. In this manner, different frame structures canbe configured for different frequency domain sub-resources in the sixth frequency domain resource. In this manner, it is ensured that the terminal device has, on any symbol in the frequency domain resource, a frequency domain sub-resource on which uplink transmission and downlink transmission can be performed.

The sixth frequency domain resource is a consecutive frequency domain resource, a start position of the sixth frequency domain resource in frequency domain is less than or equal to start positions of the first frequency domain resource and the second frequency domain resource in frequency domain, and an end position of the sixth frequency domain resource in frequency domain is greater than or equal to the start positions of the first frequency domain resource and the second frequency domain resource in frequency domain. Alternatively, the sixth frequency domain resource is a discrete frequency domain resource and includes a first frequency domain sub-resource and a second frequency domain sub-resource, a frequency domain position of the first frequency domain sub-resource is aligned with the first frequency domain resource and is a consecutive frequency domain resource, and a frequency domain position of the second frequency domain sub-resource is aligned with the second frequency domain resource and is a consecutive frequency domain resource.

For example, if the first frequency domain resource and the second frequency domain resource may be two subbands in the first BWP, the sixth frequency domain resource may be the first BWP, or the sixth frequency domain resource may be a third subband in the first BWP, and an RB resource included in the third subband is equal to a union set of RB resources included in the first subband and the second subband, or the third subband includes all RB resources in the first subband and the second subband.

For another example, if the first frequency domain resource and the second frequency domain resource are two BWPs on the first CC, the sixth frequency domain resource may be the first CC, or the sixth frequency domain resource may be a third BWP on the first CC, and an RB resource included in the third BWP is equal to a union set of RB resources included in the first BWP and the second BWP, or the third BWP includes all RB resources in the first BWP and the second BWP.

For example, if the first frequency domain resource and the second frequency domain resource are two CCs in the first band, the sixth frequency domain resource may be the first band, or the sixth frequency domain resource may be a third CC in the first band, and an RB resource included in the third CC is equal to a union set of RB resources included in the first CC and the second CC, or the third CC includes all RB resources in the first CC and the second CC.

Optionally, the network device may directly indicate a frequency domain position of the first transmission in the sixth frequency domain resource, that is, an RB set occupied in frequency domain. In this method, the network device always indicates, by using the sixth frequency domain resource as a unit, the terminal device to send and receive information. Correspondingly, the terminal device always sends and receives information on the sixth frequency domain resource, and the network device does not need to send frequency domain resource switching signaling, and does not need to perform combination of initial transmission and retransmission across frequency domain resources. This can simplify a higher layer protocol design.

For example, to maximize quality of the first transmission and reduce leakage interference to other adjacent-frequency transmission as much as possible, the terminal device adjusts a transceiver channel parameter based on a direction of the first transmission, the frame structure A, and the frame structure B, and performs the first transmission at the time domain position and the frequency domain position based on an adjusted transceiver channel. In other words, the first transmission is always performed on the sixth frequency domain resource, but the transceiver channel of the terminal device may perform parameter adjustment based on one of a plurality of frequency domain resources included in the sixth frequency domain resource, to avoid leakage interference to another frequency domain resource.

For example, if the terminal device supports simultaneous data sending and receiving, when performing data sending and receiving, the terminal device adaptively adjusts an operating parameter of the transceiver channel based on the frame structure A corresponding to the first frequency domain resource and the frame structure B corresponding to the second frequency domain resource.

For example, for a first TTI, if the frame structure A is a downlink symbol and correspondingly, the frame structure B is an uplink symbol, a receiving channel parameter of the terminal device needs to match the first frequency domain resource. It may be understood as that an operating frequency of a frequency mixer matches the frequency domain position of the first frequency domain resource, or a bandwidth of a filter matches the width of the first frequency domain resource. Similarly, a transmitting channel parameter of the terminal device needs to match the second frequency domain resource.

For example, if the terminal device does not support simultaneous data sending and receiving, when performing the first transmission, the terminal device adaptively adjusts an operating parameter of the transceiver channel based on the frame structure A corresponding to the first frequency domain resource and the frame structure B corresponding to the second frequency domain resource.

For example, if the first transmission is downlink transmission, the frame structure A at the time domain position of the first transmission is a downlink symbol, and the frame structure B is an uplink symbol, a receiving channel parameter of the terminal device needs to match the first frequency domain resource. When the frame structure A at the time domain position of the first transmission is an uplink symbol, and the frame structure B is a downlink symbol, a receiving channel parameter of the terminal device needs to match the second frequency domain resource. Similarly, if the first transmission is uplink transmission, when the frame structure A at the time domain position of the first transmission is a downlink symbol, and the frame structure B is an uplink symbol, a transmitting channel parameter of the terminal device needs to match the second frequency domain resource; when the frame structure A at the time domain position of the first transmission is an uplink symbol, and the frame structure B is a downlink symbol, a transmitting channel parameter of the terminal device needs to match the first frequency domain resource.

For example, before step 202, the network device indicates, to the terminal device, whether the first transmission is initial transmission or retransmission of data transmission, and if the first transmission is retransmission, further indicates a frequency domain resource on which previous retransmission or initial transmission of the first transmission is performed, so that the terminal device correctly performs retransmission combination and retransmission sending.

For example, when the first transmission is data transmission, for example, retransmission of a PDSCH or a PUSCH, 5G NR supports HARQ-based data retransmission. APDSCH is used as an example. The network device first sends initial transmission of data in a HARQ process. The terminal device receives the data. If the terminal device successfully decodes the data, the terminal device feeds back an ACK to the network device. After receiving the ACK, the network device acknowledges successful data transmission and releases the HARQ process (which may be used for next data transmission). After receiving initial transmission of next data in the HARQ process, the terminal device overwrites previously reserved soft information in a buffer of the HARQ process, and stores soft information of current transmission. If the terminal device incorrectly decodes the data, the terminal device feeds back a NACK to the network device. After receiving the NACK, the network device may send retransmission of the data by using the same HARQ process. Retransmission and initial transmission of the data correspond to a same information bit, and may be a same encoded bit, or may be different encoded bits truncated after same mother code is encoded. Correspondingly, the terminal device receives data retransmission in the HARQ process, and may choose to perform joint processing on the retransmitted received data and the initially transmitted received data, for example, perform joint decoding based on stored soft information (for example, a likelihood value of an information bit) transmitted last time and soft information transmitted this time, to improve a decoding success probability. If joint decoding succeeds, the terminal device feeds back an ACK to the network device, and the network device releases the HARQ process after receiving the ACK. If joint decoding fails, the terminal device feeds back a NACK to the network device. After receiving the NACK, the network device sends second time of retransmission of the data transmission by using the same HARQ process, and the procedure is repeated until the network device determines that the data is correctly received or a maximum quantity of retransmission times is reached.

A procedure of PUSCH transmission is similar to that of PDSCH transmission. A difference lies in that if the network device indicates that current transmission is retransmission of data transmission, the terminal device needs to send an initially transmitted information bit, and the network device indicates whether a retransmitted encoded bit is consistent with the initially transmitted bit.

For example, when the first transmission is retransmission of downlink data, the terminal device determines a frequency domain resource for previous transmission (which may be initial transmission or previous retransmission) of current transmission based on a frequency domain resource indicated by the network device for previous retransmission or initial transmission of the first transmission. It is assumed that the frequency domain resource is a second target frequency domain resource. After receiving the first transmission, the terminal device combines the first transmission and previous transmission received in a same HARQ process on the second target frequency domain resource, to improve a decoding success probability. In a possible implementation method, after the terminal device receives initial transmission of the downlink data, when initial transmission fails, the terminal device establishes a buffer buffer corresponding to the HARQ process on the frequency domain resource for initial transmission, and buffers corresponding soft information (for example, the data or a likelihood ratio of the data). Then, the terminal device receives retransmission of the data transmission, and performs joint decoding on the retransmitted received data and the data in the buffer regardless of whether retransmission and initial transmission are on a same frequency domain resource. If decoding still fails, the terminal device further stores combined soft information in the buffer. In other words, the terminal device establishes the HARQ buffer based on the frequency domain resource for initial transmission, and maintains the data buffer and joint processing for subsequent retransmission.

For example, when the first transmission is retransmission of uplink data, the terminal device determines a frequency domain resource for previous transmission (which may be initial transmission or previous retransmission) of current transmission based on a frequency domain resource indicated by the network device for previous retransmission or initial transmission of the first transmission. Assuming that the frequency domain resource is a third target frequency domain resource, the terminal device determines an information bit (or a transport block (Transport Block, TB)) that needs to be transmitted, and encodes the information bit to obtain an encoded bit, or directly determines a bit (for example, a bit stored after previous transmission is encoded) obtained after mother code encoding is performed on an information bit that needs to be transmitted, and determines an encoded bit that needs to be transmitted. In a possible implementation method, after sending initial transmission of uplink data, the terminal device establishes a buffer buffer corresponding to a HARQ process on a frequency domain resource for initial transmission, and buffers corresponding information (for example, a data information bit or a bit obtained after mother code encoding). If the terminal device is scheduled to send retransmission of the data transmission, regardless of whether retransmission and initial transmission are performed on a same frequency domain resource, the terminal device reads an information bit or a bit obtained after mother code encoding from the buffer, and generates an encoded bit that finally needs to be transmitted. In other words, the terminal device establishes the HARQ buffer based on a frequency band for initial transmission, and maintains a subsequently retransmitted information bit or bit obtained after mother code encoding.

For example, the first frequency domain resource and the second frequency domain resource are different CCs (for example, two CCs), and the first transmission is hybrid automatic repeat request HARQ retransmission scheduled by using first downlink control information (downlink control information, DCI). The network device sends first indication information to the terminal device, where the first indication information is carried in first DCI and indicates a fourth frequency domain resource, the fourth frequency domain resource is a frequency domain resource on which HARQ initial transmission corresponding to the first transmission is performed, and the fourth frequency domain resource is a CC, for example, the fourth frequency domain resource is the first frequency domain resource or the second frequency domain resource.

For example, the first frequency domain resource and the second frequency domain resource are different CCs, and the first transmission is data transmission scheduled by using first DCI and corresponds to a first HARQ process number. The network device sends first indication information to the terminal device, where the first indication information is carried in the first DCI and indicates a fourth frequency domain resource, the fourth frequency domain resource is a frequency domain resource on which latest transmission of the HARQ process number corresponding to the first transmission is performed, and the fourth frequency domain resource is a CC, for example, the fourth frequency domain resource is the first frequency domain resource or the second frequency domain resource. In this way, the terminal device may determine latest scheduling information of the first HARQ process number based on first indication information, to determine whether current transmission is new transmission or retransmission.

For example, when the first transmission is downlink data transmission, is scheduled by using the first DCI, and corresponds to the first HARQ process number, the terminal device determines, based on the first indication information sent by the network device, a frequency domain resource on which latest transmission of the first HARQ process number is performed, and assuming that the frequency domain resource is a second target frequency domain resource, and further determines whether current first transmission is initial transmission or retransmission. Specifically, when latest transmission is transmission scheduled by using DCI, the terminal device determines, based on an NDI in DCI for scheduling the latest transmission and an NDI value in the first DCI, whether current transmission is data retransmission. For example, when the NDI is not toggled, it is considered that current first transmission is data retransmission. When latest transmission is configured data transmission, for example, semi-persistent scheduling transmission, whether current first transmission is retransmission is determined based on an NDI value in the first DCI. For example, when the NDI value in the first DCI is 1, it is considered that current first transmission is data retransmission. In this way, if the first transmission is data retransmission, after receiving the first transmission, the terminal device combines the first transmission and latest transmission that has a same HARQ process number and that is received on the second target frequency domain resource, to improve a decoding success probability. In a possible implementation method, after the terminal device receives initial transmission of the downlink data, when initial transmission fails, the terminal device establishes a buffer buffer corresponding to the HARQ process on the frequency domain resource for initial transmission, and buffers corresponding soft information (for example, the data or a likelihood ratio of the data). Then, the terminal device receives retransmission of the data transmission, and performs joint decoding on the retransmitted received data and the data in the buffer regardless of whether retransmission and initial transmission are on a same frequency domain resource. If decoding still fails, the terminal device further stores combined soft information in the buffer. In other words, the terminal device establishes the HARQ buffer based on the frequency domain resource for initial transmission, and maintains the data buffer and joint processing for subsequent retransmission.

For example, when the first transmission is uplink data transmission, is correspondingly scheduled by using the first DCI, and corresponds to the first HARQ process number, the terminal device determines, based on the first indication information sent by the network device, a frequency domain resource on which latest transmission of the first HARQ process number is performed, and assuming that the frequency domain resource is a third target frequency domain resource, and further determines whether current first transmission is initial transmission or retransmission. Specifically, when latest transmission is transmission scheduled by using DCI, the terminal device determines, based on an NDI in DCI for scheduling the latest transmission and an NDI value in the first DCI, whether current transmission is data retransmission. For example, when the NDI is toggled, it is considered that current first transmission is data retransmission. When latest transmission is configured data transmission, for example, configured grant uplink transmission, the terminal device determines, based on an NDI value in the first DCI, whether current first transmission is retransmission. For example, when the NDI value in the first DCI is 1, it is considered that current first transmission is data retransmission. In this case, the terminal device determines, based on the third target frequency domain resource and whether the current first transmission is initial transmission or retransmission, an information bit (or a TB) that needs to be transmitted. For example, when the current first transmission is retransmission, the information bit that needs to be transmitted is an information bit corresponding to latest transmission of the HARQ process number on the third target frequency domain resource. The terminal device encodes the information bit to obtain an encoded bit, or directly determines a bit (for example, a bit stored after previous transmission is encoded) obtained after mother code encoding is performed on the information bit that needs to be transmitted, and determines an encoded bit that needs to be transmitted. In a possible implementation method, after sending initial transmission of uplink data, the terminal device establishes a buffer buffer corresponding to a HARQ process on a storage resource in which a frequency domain resource for initial transmission is located, and buffers corresponding information (for example, a data information bit or a bit obtained after mother code encoding). If the terminal device is scheduled to send retransmission of the data transmission, regardless of whether retransmission and initial transmission are performed on a same frequency domain resource, the terminal device reads an information bit or a bit obtained after mother code encoding from the buffer, and generates an encoded bit that finally needs to be transmitted. In other words, the terminal device establishes the HARQ buffer based on the frequency domain resource for initial transmission, and maintains a subsequently retransmitted information bit or bit obtained after mother code encoding.

For another example, the first frequency domain resource and the second frequency domain resource are different CCs (for example, two CCs), and the first transmission is data transmission scheduled by using first DCI and corresponds to a first HARQ process number. The network device sends first indication information to the terminal device, where the first indication information is carried in the first DCI and indicates a fourth frequency domain resource and a second HARQ process number on the fourth frequency domain resource, the fourth frequency domain resource is the first frequency domain resource or the second frequency domain resource, and the first transmission is initial transmission or retransmission of latest transmission of the second HARQ process number on the fourth frequency domain resource.

Optionally, the network device first determines, for a HARQ process number i on the first frequency domain resource by using one piece of configuration information, an associable HARQ process number subset Ai on the second frequency domain resource, where i may be one or more values of 0, 1, ..., and N-1, and N is a quantity of HARQ processes on the first frequency domain resource, to indicate that transmission data of the HARQ process number i on the first frequency domain resource may be retransmitted in a HARQ process in the subset Ai on the second frequency domain resource. Alternatively, an associable HARQ process number subset Bj on the first frequency domain resource is determined for a HARQ process number j on the second frequency domain resource, to indicate that the HARQ process number j on the second frequency domain resource may be used to transmit data in a HARQ process in the HARQ process subset Bj on the first frequency domain resource. The first frequency domain resource and the second frequency domain resource have no order, and are merely examples for description. In this case, the network device schedules the first transmission on the second frequency domain resource by using the first DCI. Corresponding to the first HARQ process number, the first DCI may carry the first indication information, to indicate the fourth frequency domain resource and the second HARQ process number on the fourth frequency domain resource, and indicate that the first transmission is retransmission or initial transmission of the latest transmission corresponding to the second HARQ process on the fourth frequency domain resource. The fourth frequency domain resource herein may be the first frequency domain resource or the second frequency domain resource.

In a possible implementation method, when the first indication information indicates that the fourth frequency domain resource is the target frequency domain resource on which the first transmission is performed, the second HARQ process number is equal to the first HARQ process number, and whether the first transmission is retransmission or initial transmission depends on the NDI value in the first DCI, which is the same as an existing method. When the first indication information indicates that the fourth frequency domain resource is not the target frequency domain resource on which the first transmission is performed, the second HARQ process number can be selected only from the subset Bj, where the subset Bj corresponds to a HARQ process number subset on the first frequency domain resource corresponding to the first HARQ process number (whose value is j) on the second frequency domain resource. It is assumed herein that the target frequency domain resource is the second frequency domain resource. Specifically, the first indication information may be jointly designed with an NDI field in the first DCI. To be specific, a field length of the first indication information is M, and there may be 2^{M} values. Two values correspond to that the fourth frequency domain resource is the target frequency domain resource on which the first transmission is performed and an NDI value is 1, and correspond to that the fourth frequency domain resource is the target frequency domain resource on which the first transmission is performed and an NDI value is 0. The remaining 2^{(M-1)} values separately correspond to that the fourth frequency domain resource is not the target frequency domain resource on which the first transmission is performed and a corresponding second HARQ process number is indexed in the subset Bj. In this method, a degree of freedom for the network device to select one HARQ process on the second frequency domain resource to carry retransmission of a HARQ process on the first frequency domain resource is increased. In other words, when data of the HARQ process number i on the first frequency domain resource needs to be retransmitted, and there is no transmission symbol in a corresponding direction on the first frequency domain resource, the network device may select one HARQ process number from the subset Ai on the second frequency domain resource to carry retransmission. In this way, when the HARQ process number i on the first frequency domain resource is occupied again (that is, data transmission is not successfully received), buffers of the HARQ process number on the network device side and the terminal device side are not released, and the network device does not expect to preempt the buffer space and may use another HARQ process number whose buffer is released to carry retransmission of the data, thereby improving flexibility. Correspondingly, if the first transmission is downlink transmission, the terminal device does not expect that latest data transmission of the first HARQ process number on the target frequency domain resource fails to be received (or no ACK is fed back). If the first transmission is uplink transmission, the terminal device receives the indication and may implicitly learn that latest data transmission of the first HARQ process number on the target frequency domain resource has been successfully received by the network device. In both cases, the terminal device may clear previously stored content in buffer space corresponding to the first HARQ process number, to store data of the second HARQ process number on the fourth frequency domain resource.

For another example, the first frequency domain resource and the second frequency domain resource are different CCs (for example, two CCs), and the first transmission is hybrid automatic repeat request HARQ retransmission for downlink data transmission. The network device sends first indication information to the terminal device, where the first indication information is higher layer signaling indicating a fourth frequency domain resource set, and indicating that all frequency domain resources in the fourth frequency domain resource set share one HARQ process. The terminal device initially transmits, on a frequency domain resource in the fourth frequency domain resource set based on the first indication information, a HARQ process corresponding to the first transmission, where the frequency domain resource is the fourth frequency domain resource, and the fourth frequency domain resource is a CC.

The fourth frequency domain resource may be the first frequency domain resource or the second frequency domain resource, or may be a frequency domain resource different from the first frequency domain resource or the second frequency domain resource. In an example, the fourth frequency domain resource and the target frequency domain resource on which the first transmission is performed are different frequency domain resources. In another example, the fourth frequency domain resource and the target frequency domain resource on which the first transmission is performed are different frequency domain resources, and the fourth frequency domain resource belongs to the first frequency domain resource set. In other words, the fourth frequency domain resource and the target frequency domain resource belong to one frequency domain resource set. It is ensured that the fourth frequency domain resource and the target frequency domain resource belong to one frequency domain resource set, so that a frequency domain resource switching latency of the terminal device can be reduced, and a data retransmission processing latency can be reduced.

For example, before step 201, this embodiment may further include: The network device sends seventh indication information to the terminal device, where the seventh indication information indicates the frame structure A and the frame structure B. Optionally, the seventh indication information is higher layer configuration signaling such as an RRC parameter, or physical layer signaling such as DCI.

For example, before step 201, this embodiment may further include: The network device sends third DCI to the terminal device, where the third DCI includes a first field, the first field indicates a first index, and the first index indicates the frame structure A and the frame structure B. Alternatively, the network device sends fourth DCI to the terminal device, where the fourth DCI includes a second field and a third field, the second field indicates a second index, the second index indicates the frame structure A, the third field indicates a third index, and the third index indicates the frame structure B.

For example, the terminal device determines the frame structure A and the frame structure B based on the first index indicated by the first field and a first relationship, where the first relationship includes at least one mapping relationship, and each mapping relationship includes at least two frame structures and one index corresponding to the at least two frame structures. In this manner, the first index can be dynamically and quickly indicated, and the frame structure A and the frame structure B are jointly determined based on the first index, so that overheads for indicating the first index by the DCI can be reduced.

For another example, the terminal device determines the frame structure A based on the second index and a second relationship, and determines the frame structure B based on the third index and a third relationship. The second relationship and the third relationship each include a mapping relationship, and each mapping relationship includes one frame structure and an index corresponding to the frame structure. In this manner, the second index and the third index can be dynamically and quickly indicated, and the frame structure A and the frame structure B are respectively determined based on the second index and the third index, so that maximum indication flexibility can be provided.

In the embodiment shown in FIG. 2, when transmission in two different directions on two frequency domain resources collides, the network device and the terminal device may determine, by using at least one of features such as a scheduling manner, a physical layer priority, a frequency resource priority, and a communication direction, specific transmission to be reserved, to ensure that high-priority transmission can be normally performed.

Specifically, when second transmission on the first frequency domain resource and third transmission on the second frequency domain resource overlap in time domain, the terminal device and the network device determine to perform the first transmission on the first frequency domain resource or the second frequency domain resource, where the first transmission is one of the second transmission and the third transmission.

The frequency domain resource herein may be a band, a CC, or a BWP. A meaning of the frequency domain resource is the same as a meaning in 201. For example, the first frequency domain resource and the second frequency domain resource are two different CCs in one band, or two different BWPs in one CC.

Optionally, a TDD frame structure of the first frequency domain resource is different from a TDD frame structure of the second frequency domain resource. For example, a subcarrier spacing of the first frequency domain resource is the same as a subcarrier spacing of the second frequency domain resource, and TDD frame structures are respectively 7D:1S:2U and 2D:1S:7U.

Optionally, a communication direction of the second transmission is different from a communication direction of the third transmission. For example, the second transmission is downlink transmission, and the third transmission is uplink transmission; or the second transmission is uplink transmission, and the third transmission is downlink transmission.

The second transmission is used as an example. When the second transmission is a PDCCH, it does not mean that the second transmission is actually sent PDCCH transmission, but candidate PDCCH transmission. A time domain position of the second transmission corresponds to a configured PDCCH monitoring occasion (monitoring occasion). In other words, that the third transmission overlaps the PDCCH monitoring occasion configured on the first frequency domain resource in time domain also falls within a consideration scope of this embodiment of the present invention. Similarly, when the second transmission is configured downlink transmission or uplink transmission, for example, an SPS PDSCH, a CG PUSCH, a PUCCH carrying an SPS HARQ-ACK, or a PUCCH carrying an SR, the second transmission is not necessarily actual transmission in this case, but is potential data channel or control channel transmission on a corresponding transmission occasion, or in other words, a time-frequency resource occupied by data channel transmission or control channel transmission.

Optionally, the terminal device does not support simultaneous information sending and receiving on the first frequency domain resource and the second frequency domain resource. For example:
✔ sending information on the second frequency domain resource when receiving information on the first frequency domain resource is not supported, and receiving information on the second frequency domain resource when sending information on the first frequency domain resource is not supported; or
✔ simultaneously receiving information on the first frequency domain resource and the second frequency domain resource is not supported, and simultaneously sending information on the first frequency domain resource and the second frequency domain resource is not supported.

Correspondingly, the network device may send the information for configuring the first frequency domain resource and the second frequency domain resource to the terminal device, and send configuration information or scheduling information of the second transmission and the third transmission to the terminal device. Correspondingly, before the terminal device determines the second transmission and the third transmission, the terminal device further receives the information for configuring the first frequency domain resource and the second frequency domain resource, and determines values of parameters such as frequency domain positions and frequency domain widths of the first frequency domain resource and the second frequency domain resource. The terminal device further receives configuration information or scheduling information of the second transmission and the third transmission, and determines a time domain position of the second transmission, a time domain position of the third transmission, and another transmission parameter.

The terminal device and the network device may determine one of the second transmission and the third transmission as the first transmission according to the following criterion.
✔ Criterion #1: A priority of dynamically scheduled transmission is higher than a priority of transmission configured by a higher layer. When the second transmission is dynamically scheduled and the third transmission is configured by a higher layer, it is determined that the first transmission is the second transmission.

Dynamically scheduled transmission means that a time-frequency resource for the transmission is scheduled by using one piece of DCI. For example, the dynamically scheduled transmission may be a PDSCH dynamically scheduled by using DCI, a CSI-RS dynamically scheduled by using DCI, a PUCCH carrying a HARQ-ACK of a PDSCH dynamically scheduled by using DCI, a PUCCH carrying a dynamic scheduling CSI report, a dynamically scheduled SRS, or a dynamically scheduled PRACH.

The transmission configured by a higher layer means that a time-frequency resource for the transmission is configured by using higher layer signaling, and may occur periodically. For example, the transmission configured by a higher layer may be an SPS PDSCH, a periodic CSI-RS, a PDCCH monitoring occasion configured by a higher layer, a CG PUSCH, a PUCCH carrying an SR, a PUCCH carrying a periodic CSI report, a PUCCH carrying a HARQ-ACK of an SPS PDSCH, a periodic SRS, a periodic synchronization signal, a periodic PBCH, or a periodic PRACH.
✔ Criterion #2: When a physical layer priority of the second transmission is greater than a physical layer priority of the third transmission, it is determined that the first transmission is the second transmission.

For transmission dynamically scheduled by using DCI, a physical layer priority of the transmission is indicated by a priority indication field in the DCI. For transmission configured by using higher layer signaling, a priority of the transmission is indicated by an information element in corresponding higher layer signaling. Specifically, a physical layer priority of an SPS PDSCH is indicated in SPS configuration information, and different SPS configurations with different SPS indexes may correspond to different physical layer priorities. A physical layer priority of a CG PUSCH is indicated in CG configuration information, and different CG configurations with different CG PUSCH indexes may correspond to different physical layer priorities. A physical layer priority of a PDCCH is indicated in control-resource set (control-resource set, CORESET) configuration information or search space (search space, SS) configuration information corresponding to transmission of the candidate PDCCH, and different CORESET configurations with different CORESET identifiers or different SS configurations with different SS identifiers may correspond to different physical layer priorities. A physical layer priority of an SR is indicated in PUCCH resource configuration information carrying the SR. A physical layer priority of a CSI-RS, a CSI report, an SRS, or the like may be indicated in corresponding configuration information, or may be a low priority by default. A physical layer priority of a synchronization signal, a PBCH, or a PRACH may be a high priority by default, or may be indicated in corresponding configuration information.

For a PDCCH, a plurality of candidate PDCCHs for transmission may exist on one PDCCH occasion, and correspond to different CORESETs in frequency domain. If a physical layer priority of the PDCCH is configured by per-CORESET, one PDCCH occasion may correspond to a plurality of CORESETs, that is, a plurality of PDCCH blind detecting (BD) candidates exist. In this case, a priority of the PDCCH monitoring occasion may be determined based on a highest priority of a plurality of CORESETs.
✔ Criterion #3: When a priority of a frequency domain resource on which the second transmission is performed is higher than a priority of a frequency domain resource on which the third transmission is performed, it is determined that the first transmission is the second transmission.

The priority of the frequency domain resource is a priority between a plurality of frequency domain resources. For example, if the frequency domain resource is a plurality of BWPs on one CC, the priority indicates a BWP that UE preferentially selects to transmit information when overlapping information is transmitted in the plurality of BWPs. The priority of the frequency domain resource may be one priority configured for each frequency domain resource, or may be indicated in frequency domain resource configuration information at a higher layer. For example, the frequency domain resource is a plurality of BWPs on one CC. Priority information of a BWP may be that a priority is configured for each BWP, or a common priority is indicated in configuration information of the CC to which these BWPs belong.
✔ Criterion #4: A priority of uplink transmission is higher than a priority of downlink transmission. When the second transmission is uplink transmission and the third transmission is downlink transmission, it is determined that the first transmission is the second transmission.

Optionally, the criterion #4 may be replaced with "a priority of downlink transmission is higher than a priority of uplink transmission"; or the network device may send priority criterion configuration information to the terminal device, where the priority criterion configuration information indicates whether the criterion #4 is "a priority of uplink transmission is higher than a priority of downlink transmission" or "a priority of downlink transmission is higher than a priority of uplink transmission".
J Criterion #5: When the third transmission is an event-triggered uplink transmission and the transmission is not triggered, it is determined that the first transmission is the second transmission. Optionally, the criterion further includes: The second transmission is downlink transmission, or the second transmission is not event-triggered uplink transmission.

The event-triggered uplink transmission may be a CG PUSCH, a PUCCH carrying an SR, an SRS or a CSI report triggered by a NACK, or a PRACH. For the CG PUSCH, "not triggered" means that a CG PUSCH occasion (occasion) is skipped, in other words, the UE has no data to send, and does not send data on the CG PUSCH occasion. For the PUCCH carrying an SR, "not triggered" means that a higher layer does not trigger a corresponding SR to be sent on a PUCCH resource, in other words, the SR is negative. For the SRS or the CSI report triggered by a NACK, that is, the SRS or the CSI report is associated with receiving of one piece of downlink data, and the SRS or CSI is sent on a corresponding time-frequency resource only when decoding of the downlink data fails. In this case, "not triggered" means that the associated downlink data is correctly decoded. For the PRACH, "not triggered" means that the terminal device does not send the PRACH.

The terminal device and the network device may further determine, one of the second transmission and the third transmission as the first transmission according to a plurality of criteria in the foregoing five criteria.

### ✔ The criterion #1 and the criterion #2 work jointly and "criterion #1>criterion #2"

When the second transmission is dynamically scheduled and the third transmission is configured by a higher layer, it is determined that the first transmission is the second transmission; or when both the second transmission and the third transmission are dynamically scheduled (or both are configured by a higher layer) and the physical layer priority of the second transmission is higher than the physical priority of the third transmission, it is determined that the first transmission is the second transmission.

### ✔ The criterion #1 and the criterion #2 work jointly and "criterion #2>criterion #1"

When the physical layer priority of the second transmission is higher than the physical priority of the third transmission, it is determined that the first transmission is the second transmission; or when the physical layer priority of the second transmission is the same as the physical layer priority of the third transmission, the second transmission is dynamically scheduled, and the third transmission is configured by a higher layer, it is determined that the first transmission is the second transmission.

### ✔ The criterion #1 and the criterion #3 work jointly and "criterion #1>criterion #3"

When the second transmission is dynamically scheduled and the third transmission is configured by a higher layer, it is determined that the first transmission is the second transmission; or when both the second transmission and the third transmission are dynamically scheduled (or both are configured by a higher layer) and the priority of the frequency domain resource (that is, the first frequency domain resource) on which the second transmission is performed is higher than the priority of the frequency domain resource (that is, the second frequency domain resource) on which the third transmission is performed, it is determined that the first transmission is the second transmission.

### ✔ The criterion #1 and the criterion #3 work jointly and "criterion #3>criterion #1"

When the priority of the frequency domain resource on which the second transmission is performed is higher than the priority of the frequency domain resource on which the third transmission is performed, it is determined that the first transmission is the second transmission; or when the priority of the frequency domain resource on which the second transmission is performed is equal to the priority of the frequency domain resource on which the third transmission is performed, the second transmission is dynamically scheduled, and the third transmission is configured by a higher layer, it is determined that the first transmission is the second transmission.

Similarly, the criterion #2 and the criterion #3 work jointly and "criterion #2>criterion #3"; the criterion #2 and the criterion #3 work jointly and "criterion #3>criterion #2"; the criterion #1, the criterion #2 (or the criterion #3), and the criterion #4 work jointly and criterion #1>criterion #2 (or criterion #3)>criterion #4; or the criterion #1, the criterion #2 (or the criterion #3), and the criterion #4 work jointly, and criterion #2 (or criterion #3)>criterion #1>criterion #4.

Alternatively, optionally, the criterion #5 may work jointly with any other criterion, and "criterion #5>another criterion". To be specific, the terminal device preferentially determines whether the third transmission is actually triggered. If the third transmission is not triggered, the terminal device does not participate in conflict processing. The third transmission has a low priority by default, and the second transmission is preferentially performed. According to this processing method, it can be avoided that invalid uplink transmission causes other transmission to be punctured.

Optionally, a priority of each type of transmission may be predefined or preconfigured by using a higher layer parameter. For example, a priority of a HARQ-ACK of an SPS PDSCH is higher than a priority of a configured PDCCH occasion, or a priority of a configured PDCCH occasion is higher than priorities of a CG PUSCH and a PUCCH carrying an SR.

Optionally, before determining the first transmission, the terminal device needs to receive some configuration information or indication information sent by the network device, for example, physical layer priority indication information of the second transmission and the third transmission, and/or priority configuration information of the first frequency domain resource and the second frequency domain resource.

For example, the second transmission is determined as the first transmission from the second transmission and the third transmission. Optionally, before the terminal device performs the first transmission, if a frequency domain resource currently used by the terminal device for data transmission is not the first frequency domain resource, the terminal device may first perform frequency domain resource switching to switch to the first frequency domain resource, and adjust a transceiver channel parameter based on a configuration parameter of the first frequency domain resource. The frequency domain resource parameter includes at least one of a center frequency, a bandwidth, a subcarrier spacing, and a TDD frame structure. For example, the terminal device adjusts an operating point of a frequency mixer based on the center frequency; adjusts a parameter of a baseband filter based on the bandwidth; adjusts resolution and a sampling rate of analog-to-digital conversion or digital-to-analog conversion based on the bandwidth; adjusts a size of baseband DFT based on the bandwidth and the subcarrier spacing; or performs sending or receiving conversion based on the TDD frame structure and a communication direction of the first transmission. After the terminal device adjusts the transceiver channel parameter based on the frequency domain resource on which the first transmission is performed, the terminal device performs the first transmission by using a transceiver channel, that is, sends uplink information or receives downlink information.

For example, the second transmission is determined as the first transmission from the second transmission and the third transmission. When the first transmission is uplink transmission, the terminal device does not expect to receive downlink transmission on the second frequency domain resource in a W1 time period before the first transmission; or when the first transmission is downlink transmission, the terminal device does not expect to send uplink transmission on the second frequency domain resource in a W1 time period before the first transmission; or the terminal device does not expect to perform information transmission (including downlink and uplink transmission) on the second frequency domain resource in a W1 time period before the first transmission.

Correspondingly, the network device performs the first transmission on a time-frequency resource corresponding to the first transmission, where the first transmission is one of the second transmission and the third transmission, and meets the foregoing priority criterion.

It is assumed that the second transmission is determined as the first transmission from the second transmission and the third transmission. On the first frequency domain resource, after completing the first transmission, the terminal device determines an activated frequency domain resource according to at least one of the following rules.
✔ Rule A: A current frequency domain resource is kept unchanged, that is, an activated frequency domain resource is kept on the first frequency domain resource.
✔ Rule B: An activated frequency domain resource is a preset frequency domain resource, and the preset frequency domain resource is predefined or preconfigured by a higher layer. To be specific, if the preset frequency domain resource is the same as the first frequency domain resource, frequency domain resource switching does not need to be performed; if the preset frequency domain resource is not the same as the first frequency domain resource, the terminal device switches from the first frequency domain resource to the preset frequency domain resource.
   ✔ Rule C: An activated frequency domain resource is a frequency domain resource that has a downlink transmission symbol. To be specific, the terminal device adaptively switches, at different moments, to a frequency domain resource that has a downlink symbol. In this case, if a symbol on the first frequency domain resource after the first transmission is a downlink transmission symbol, frequency domain resource switching does not need to be performed; if a symbol on the second frequency domain resource after the first transmission is a downlink transmission symbol, the terminal device switches from the first frequency domain resource to the second frequency domain resource.

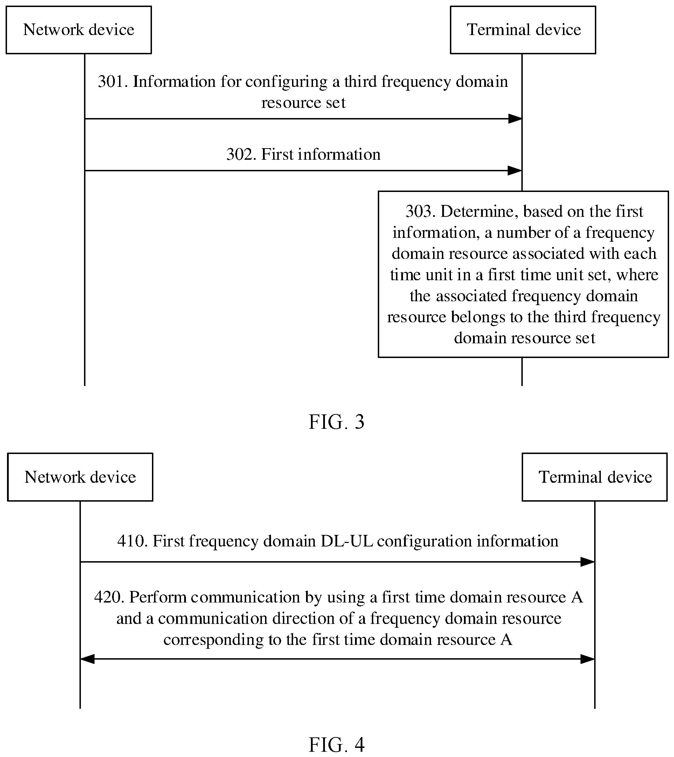

FIG. 3 is a schematic flowchart of a communication method according to an embodiment of this application.

301. A network device sends configuration information for configuring a third frequency domain resource set to a terminal device, where the third frequency domain resource set includes at least two frequency domain resources. Correspondingly, the terminal device receives the configuration information.

Optionally, the terminal device determines the third frequency domain resource set based on the configuration information.

For example, the third frequency domain resource set may include at least two CCs, at least two BWPs, or at least two subbands. For example, the third frequency domain resource set includes a plurality of BWPs on a first CC.

For example, the terminal device does not support simultaneous information receiving and/or information sending on a plurality of frequency domain resources in the third frequency domain resource set.

302. The network device sends first information to the terminal device, where the first information indicates a number of a frequency domain resource associated with each or at least one time unit in a first time unit set.

303. The terminal device receives first information, and determines, based on the first information, the number of the frequency domain resource associated with each or at least one time unit in the first time unit set. The associated frequency domain resource belongs to the third frequency domain resource set.

The first time unit set includes N time units, N is a positive integer greater than or equal to 2, and any time unit in the first time unit set is one slot, one symbol, one subslot, or a fixed quantity of consecutive symbols.

According to the method provided in this application, frequency domain resources associated with the N time units in the first time unit set may be indicated by using the first information, to avoid a case in which one piece of switching indication signaling needs to be sent for each time of frequency domain resource switching, thereby reducing signaling overheads.

For example, the third frequency domain resource set includes at least two frequency domain resources, and the at least two frequency domain resources may be at least two CCs, at least two BWPs, or at least two subbands. For example, the third frequency domain resource set includes at least two BWPs on the first CC. Each time unit in the first time unit may be one slot, one symbol, or one subslot.

For example, the first information indicates the number of the frequency domain resource associated with each or at least one time unit in the first time unit set, and the associated frequency domain resource belongs to the third frequency domain resource set. Optionally, the first information indicates the number of the frequency domain resource associated with each time unit in the first time unit set and a communication direction of the time unit, and the communication direction may be downlink information receiving or uplink information sending.

For example, the first information may include P fields, the P fields correspond to a first time window whose length is P time units, an i^{th} field indicates a number of a frequency domain resource associated with an i^{th} time unit in the first time window, or an i^{th} field indicates a number of a frequency domain resource associated with an i^{th} time unit in the first time window and a communication direction, where a start position of the first time window is an (S+j^{∗}P)^{th} time unit, and j is an integer greater than or equal to 0. Optionally, a value of the i^{th} field in the P fields may be an invalid value or null, indicating that the number of the frequency domain resource associated with the i^{th} time unit in the first time window and/or the communication direction are/is to be determined. In other words, current first information does not indicate the number of the frequency domain resource associated with the i^{th} time unit and/or the communication direction.

For example, the first information may include first indication sub-information and second indication sub-information, the first indication sub-information and the second indication sub-information each include P fields, the P fields correspond to P time units in the first time window, an i^{th} field in the first indication sub-information indicates a number of a downlink frequency domain resource associated with an i^{th} time unit in the first time window, and an i^{th} field in the second indication sub-information indicates a number of an uplink frequency domain resource associated with the i^{th} time unit in the first time window. Optionally, a value of the i^{th} field in the P fields in the first indication sub-information may be a first invalid value or null, indicating that the number of the downlink frequency domain resource associated with the i^{th} time unit in the first time window is to be determined. In other words, current first indication sub-information does not indicate the number of the downlink frequency domain resource associated with the i^{th} time unit. Optionally, a value of the i^{th} field in the P fields in the first indication sub-information may be a second invalid value, indicating that the i^{th} time unit in the first time window is not associated with any downlink frequency domain resource. In other words, downlink transmission cannot be received in the i^{th} time unit. Optionally, a value of the i^{th} field in the P fields in the second indication sub-information may be a first invalid value or null, indicating that the number of the uplink frequency domain resource associated with the i^{th} time unit in the first time window is to be determined. In other words, current second indication sub-information does not indicate the number of the uplink frequency domain resource associated with the i^{th} time unit. Optionally, a value of the i^{th} field in the P fields in the second indication sub-information may be a second invalid value, indicating that the i^{th} time unit in the first time window is not associated with any uplink frequency domain resource. In other words, uplink transmission cannot be sent in the i^{th} time unit.

For example, the third frequency domain resource set includes a frequency domain resource A and a frequency domain resource B, the first information indicates a frame structure E corresponding to the frequency domain resource A and a frame structure F corresponding to the frequency domain resource B, the first time unit set corresponds to a time unit set in which the terminal device performs first downlink transmission, and the first downlink transmission includes: at least one of an SPS PDSCH, a periodic/semi-persistent channel state information (channel state information, CSI)-reference signal (reference signal, RS) and a downlink control channel PDCCH configured by using a higher layer. In this case, that the terminal device determines, based on the frame structure E and the frame structure F, the number of the frequency domain resource associated with each time unit in the first time unit set of the terminal device includes:
For a first time unit in the first time set unit, when the frame structure E corresponds to a downlink symbol and the frame structure F corresponds to an uplink symbol, a number of a frequency domain resource for information sending and receiving in the first time unit is a number of the frequency domain resource A; when the frame structure E corresponds to an uplink symbol and the frame structure F corresponds to a downlink symbol, a number of a frequency domain resource associated with the first time unit is a number of the frequency domain resource B; when the frame structure E corresponds to a downlink symbol and the frame structure F corresponds to a downlink symbol, a number of a frequency domain resource associated with the first time unit is a number of a frequency domain resource C. The frequency domain resource C is a preset frequency domain resource in the frequency domain resource A or the frequency domain resource B, the frequency domain resource C is a frequency domain resource associated with a previous time unit closest to the first time unit for the terminal device, or the frequency domain resource C is a frequency domain resource used by the terminal device to send and receive information in a second time unit, where the second time unit is a previous time unit that is in the first time unit set and closest to the first time unit.

For example, the third frequency domain resource set includes a frequency domain resource A and a frequency domain resource B, and the first information determines to indicate a frame structure E corresponding to the frequency domain resource A and a frame structure F corresponding to the frequency domain resource B. In addition, the first time unit set is a corresponding time unit set in which the terminal device performs first uplink transmission, and the first uplink transmission includes at least one of feedback information HARQ-ACK of an SPS PDSCH, an uplink data channel PUSCH with a configured grant, periodic/semi-persistent CSI reporting, a periodic scheduling request SR, a periodic/semi-persistent sounding reference signal SRS, or a periodic random access channel. In this case, the first information indicates the frame structure E and the frame structure F, and the determining, based on the first information, the number of the frequency domain resource associated with each time unit in the first time unit set for the terminal device includes: For a first time unit in the first time set unit, when the frame structure E corresponds to a downlink symbol and the frame structure F corresponds to an uplink symbol, a number of a frequency domain resource associated with the first time unit is a number of the frequency domain resource B; when the frame structure E corresponds to an uplink symbol and the frame structure F corresponds to a downlink symbol, a number of a frequency domain resource associated with the first time unit is a number of the frequency domain resource A; when the frame structure E corresponds to a downlink symbol and the frame structure F corresponds to a downlink symbol, a number of a frequency domain resource associated with the first time unit is a number of a frequency domain resource D. The frequency domain resource D is a preset frequency domain resource in the frequency domain resource A or the frequency domain resource B, the frequency domain resource D is a frequency domain resource associated with a previous time unit closest to the first time unit, or the frequency domain resource D is a frequency domain resource used by the terminal device to send and receive information in a third time unit, where the third time unit is a previous time unit that is in the first time unit set and closest to the first time unit.

FIG. 4 is a schematic flowchart of a communication method according to an embodiment of this application. In the embodiment shown in FIG. 4, Q fields in frequency domain resource configuration information respectively indicate communication directions of Q frequency domain resources.

410. A network device sends first frequency domain DL-UL configuration information to a terminal device, where the first frequency domain DL-UL configuration information indicates a communication direction of each frequency domain resource in a fourth frequency domain resource set on a first time domain resource A. Correspondingly, the terminal device receives the configuration information.

The communication direction is an uplink direction, a downlink direction, or a flexible direction.

For example, the first frequency domain DL-UL configuration information includes Q fields that respectively indicate communication directions of Q frequency domain resources included in the fourth frequency domain resource set.

For another example, the first frequency domain DL-UL configuration information indicates three frequency domain resource sets, and communication directions respectively corresponding to the three frequency domain resource sets are an uplink direction, a downlink direction, and a flexible direction. Optionally, the first frequency domain DL-UL configuration information indicates that a frequency domain range in which the communication direction is the uplink direction is [A1, B1], a similar frequency domain range in which the communication direction is the downlink direction is [A2, B2], and a frequency domain range in which the communication direction is the flexible direction is [A3, B3]. The terminal device may determine a communication direction of each frequency domain resource based on a position of each frequency domain resource in the fourth frequency domain resource set and the first frequency domain DL-UL configuration information.

420. The network device communicates with the terminal device by using the first time domain resource A and a communication direction of a frequency domain resource corresponding to the first time domain resource A.

In this method, DL-UL configurations of a plurality of frequency domain resources in frequency domain is separately configured/indicated for each time domain resource, and the terminal device may adaptively adjust a communication direction at different moments (on different time domain resources), to adjust a transceiver channel parameter in a timely manner, and improve uplink and downlink information transmission quality.

Optionally, this embodiment may further include: 400. The network device sends first configuration information to the terminal device. Correspondingly, the terminal device receives the first configuration information, and determines time domain resource division based on the first configuration information.

The first configuration information includes at least one of a start moment S or a period P. Time domain resources are divided into a plurality of time windows of equal lengths based on the first configuration information. A length of each time window is the period P. A start moment of an i^{th} time window is S+(i-1)*P. The time domain resource is all time domain resources in a radio frame or a super frame.

It should be understood that the start moment S is defined relative to a start moment of a radio frame or a super frame (for example, N radio frames), a unit may be a slot slot, a symbol, or absolute time (for example, ms), and a unit of the period P may be a slot slot, a symbol, or absolute time (for example, ms).

402. The network device sends second configuration information to the terminal device. Correspondingly, the terminal device receives the second configuration information, and obtains time domain resource division in any time window based on the second configuration information.

For example, a time domain resource in any time window is divided into N first time domain resources, the N first time domain resources do not overlap in time domain, and N is a positive integer. For example, the first time domain resource A is one of the N first time domain resources.

For another example, if the period is four slots, where N=4, the four first time domain resources sequentially correspond to the four slots.

Optionally, the method may further include step 404. The network device sends third configuration information to the terminal device. Correspondingly, the terminal device receives the third configuration information, and determines a frequency domain resource set/a sequence based on the third configuration information.

For example, the sequence includes M frequency domain resources, each frequency domain resource corresponds to one frequency domain position, the M frequency domain resources do not overlap, and M is a positive integer. Optionally, the M frequency domain resources are in a one-to-one correspondence with the Q frequency domain resources in S410, or the M frequency domain resources include the Q frequency domain resources in S410.

Optionally, the method may further include step 404. The network device sends fourth configuration information to the terminal device. Correspondingly, the terminal device obtains the fourth configuration information, where the fourth configuration information includes the first frequency domain DL-UL configuration information of the first time domain resource A.

Optionally, the method may further include step 406. The network device sends fifth configuration information to the terminal device. Correspondingly, the terminal device obtains the fifth configuration information, and determines, based on the fifth configuration information, a start frequency domain position Z and a width B that correspond to one frequency domain resource (or one frequency domain resource set, for example, the fourth frequency domain resource set in S410).

Optionally, the method may further include step 408. The network device sends sixth configuration information to the terminal device. Correspondingly, the terminal device obtains the sixth configuration information, where the sixth configuration information indicates the first frequency domain DL-UL configuration information of the first time domain resource A.

For example, the first frequency domain DL-UL configuration information includes three parts. A first part indicates that a communication direction from the start position Z to a frequency domain position Z+B 1 is a DL direction, a second part indicates that a communication direction from the frequency domain position Z+B 1 to a frequency domain position Z+B2 is a flexible direction, and a third part indicates that a communication direction from the frequency domain position Z+B2 to a frequency domain position Z+B is a UL direction. Alternatively, a first part indicates that a communication direction from the start position Z to a frequency domain position Z+B 1 is a UL direction, a second part indicates that a communication direction from the frequency domain position Z+B 1 to a frequency domain position Z+B2 is a flexible direction, and a third part indicates that a communication direction from the frequency domain position Z+B2 to a frequency domain position Z+B is a DL direction.

In this manner, frequency domain DL-UL configuration is performed on each time domain resource, so that the terminal device adaptively adjusts the communication direction at different moments.

It should be specially noted that an execution order of step 410, step 420, and step 402 to step 408 is merely an example listed for understanding the technical solution of this application. The execution order of step 410, step 420, and step 402 to step 408 is not limited by the foregoing example. Details are not described again in this application.

It may be understood that, to implement the functions in the foregoing embodiments, the network device and the terminal device include corresponding hardware structures and/or software modules for performing the functions. A person skilled in the art should easily be aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

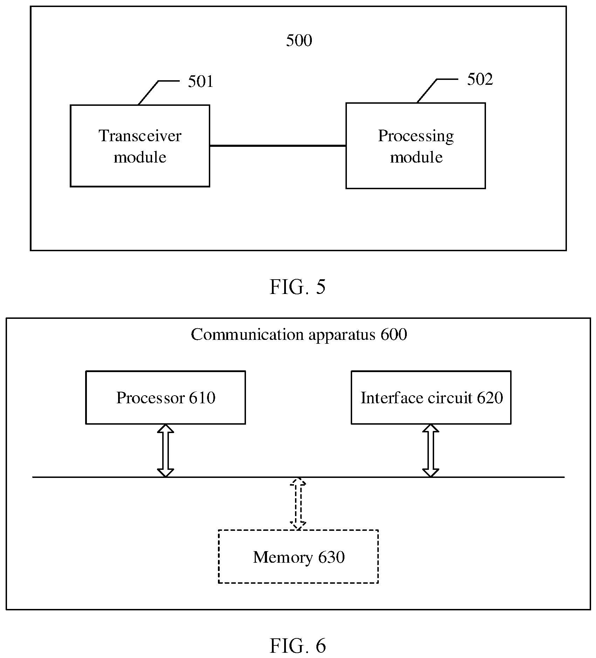

FIG. 5 and FIG. 6 are schematic diagrams of structures of possible communication apparatuses according to embodiments of this application. These communication apparatuses may be configured to implement functions of the terminal device or the network device in the foregoing method embodiments. Therefore, advantageous effects of the foregoing method embodiments can also be implemented. In embodiments of this application, the communication apparatus may be the terminal device 130 or the terminal device 140 shown in FIG. 1, may be the radio access network device 120 shown in FIG. 1, or may be a module (for example, a chip) used in the terminal device or the network device.

As shown in FIG. 5, the communication apparatus 500 includes a transceiver module 501 and a processing module 502. The communication apparatus 500 may be configured to implement functions of the terminal device or the network device in the method embodiment shown in FIG. 2, FIG. 3, or FIG. 4.

When the communication apparatus 500 is configured to implement functions of the terminal device in the method embodiment in FIG. 2, the transceiver module 501 is configured to receive information for configuring a first frequency domain resource and a second frequency domain resource, and the processing module 502 is configured to determine the first frequency domain resource and the second frequency domain resource based on the information received by the transceiver module. The first frequency domain resource corresponds to a frame structure A, the second frequency domain resource corresponds to a frame structure B, and the frame structure A is different from the frame structure B. The transceiver module 501 is configured to perform first transmission on the first frequency domain resource and/or the second frequency domain resource determined by the processing module. The first frequency domain resource and the second frequency domain resource are two different bandwidth parts BWPs on a first component carrier, the first frequency domain resource and the second frequency domain resource are two different subbands in a first BWP, or the first frequency domain resource and the second frequency domain resource are different component carriers.

When the communication apparatus 500 is configured to implement functions of the network device in the method embodiment in FIG. 2, the processing module 502 is configured to determine a first frequency domain resource and a second frequency domain resource, where the first frequency domain resource corresponds to a frame structure A, the second frequency domain resource corresponds to a frame structure B, and the frame structure A is different from the frame structure B. The transceiver module 501 is configured to send information for configuring the first frequency domain resource and the second frequency domain resource, and is configured to perform first transmission on the first frequency domain resource and/or the second frequency domain resource that are/is determined by the processing module. The first frequency domain resource and the second frequency domain resource are two different bandwidth parts BWPs on a first component carrier, the first frequency domain resource and the second frequency domain resource are two different subbands in a first BWP, or the first frequency domain resource and the second frequency domain resource are different component carriers.

When the communication apparatus 500 is configured to implement functions of the terminal device in the method embodiment in FIG. 3, the transceiver module 501 is configured to receive configuration information for configuring a third frequency domain resource set, where the third frequency domain resource set includes at least two frequency domain resources. The processing module 502 is configured to determine the third frequency domain resource set based on the configuration information for the third frequency domain resource set received by the transceiver module 501. The transceiver module 501 is configured to receive first indication information sent by a network device. The processing module 502 is configured to determine, based on the first indication information received by the transceiver module 501, a number of a frequency domain resource associated with each time unit in a first time unit set. The associated frequency domain resource belongs to the third frequency domain resource set.

When the communication apparatus 500 is configured to implement functions of the network device in the method embodiment in FIG. 3, the processing module 502 is configured to determine a third frequency domain resource set, and the transceiver module 501 is configured to: send configuration information for configuring the third frequency domain resource set to a terminal device, where the third frequency domain resource set includes at least two frequency domain resources; and send first information to the terminal device, where the first information is used to determine a number of a frequency domain resource associated with each time unit in a first time unit set. The associated frequency domain resource belongs to the third frequency domain resource set.

When the communication apparatus 500 is configured to implement functions of the terminal device in the method embodiment in FIG. 4, the transceiver module 501 is configured to receive first frequency domain DL-UL configuration information, where the first frequency domain DL-UL configuration information indicates a communication direction of each frequency domain resource in a fourth frequency domain resource set on a first time domain resource A, and the processing module 502 is configured to communicate with a network device by using the first time domain resource A and a communication direction of a frequency domain resource corresponding to the first time domain resource A.

When the communication apparatus 500 is configured to implement functions of the network device in the method embodiment in FIG. 4, the transceiver module 501 is configured to send first frequency domain DL-UL configuration information, where the first frequency domain DL-UL configuration information indicates a communication direction of each frequency domain resource in a fourth frequency domain resource set on a first time domain resource A. The processing module 502 is configured to communicate with a terminal device by using the first time domain resource A and a communication direction of a frequency domain resource corresponding to the first time domain resource A.

For more detailed descriptions of the transceiver module 501 and the processing module 502, refer to the related descriptions in the foregoing method embodiments. Details are not described herein again. It should be understood that an entity device corresponding to the transceiver module 501 may be a transceiver, and an entity device corresponding to the processing module 502 may be a processor.

As shown in FIG. 6, the communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to: store instructions executed by the processor 610, or store input data required by the processor 610 to run instructions, or store data generated after the processor 610 runs instructions.

When the communication apparatus 600 is configured to implement the methods in the foregoing method embodiments, the communication apparatus 600 is configured to perform functions of the terminal device or functions of the network device in the foregoing method embodiments.

When the communication apparatus is a chip used in a terminal device, the chip used in the terminal device implements the functions of the terminal device in the foregoing method embodiments. The chip used in the terminal device receives information from another module (for example, a radio frequency module or an antenna) in the terminal device, where the information is sent by a network device to the terminal device. Alternatively, the chip used in the terminal device sends information to another module (for example, a radio frequency module or an antenna) in the terminal device, where the information is sent by the terminal device to a network device.

When the communication apparatus is a chip used in a network device, the chip used in the network device implements the functions of the network device in the foregoing method embodiments. The chip used in the network device receives information from another module (for example, a radio frequency module or an antenna) in the network device, where the information is sent by a terminal device to the network device. Alternatively, the chip used in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium of any other form well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or the functions according to embodiments of this application are all or partially implemented. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; or may be an optical medium, for example, a DVD; or may be a semiconductor medium, for example, a solid-state drive.

In embodiments of this application, unless otherwise specified or there is a logical conflict, terms and/or descriptions between different embodiments are consistent and may be mutually referenced, and technical features in different embodiments may be combined according to an internal logical relationship thereof, to form a new embodiment.

In this application, "at least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The order numbers of the foregoing processes do not mean execution orders, and the execution orders of the processes should be determined based on functions and internal logic of the processes.

## Claims

1. A communication method, comprising:
receiving information for configuring a first frequency domain resource and a second frequency domain resource, wherein the first frequency domain resource corresponds to a frame structure A, the second frequency domain resource corresponds to a frame structure B, and the frame structure A is different from the frame structure B; and
performing first transmission on the first frequency domain resource and/or the second frequency domain resource, wherein
the first frequency domain resource and the second frequency domain resource are two different bandwidth parts BWPs on a first component carrier, the first frequency domain resource and the second frequency domain resource are two different subbands in a first BWP, or the first frequency domain resource and the second frequency domain resource are different component carriers.

2. The method according to claim 1, wherein a switching latency of switching from the first frequency domain resource to the second frequency domain resource is less than a switching latency of switching from the second frequency domain resource to a third frequency domain resource, the first frequency domain resource and the second frequency domain resource belong to a first frequency domain resource set, and the third frequency domain resource belongs to a second frequency domain resource set.

3. The method according to claim 2, wherein the first frequency domain resource and the second frequency domain resource meet at least one of the following relationships:
a frequency domain position of the first frequency domain resource does not overlap a frequency domain position of the second frequency domain resource;
a frequency domain width of the first frequency domain resource is the same as a frequency domain width of the second frequency domain resource; or
a subcarner spacing of the first frequency domain resource is the same as a subcarrier spacing of the second frequency domain resource.

4. The method according to claim 2 or 3, wherein the method further comprises:
receiving first configuration information, wherein the first configuration information indicates the first frequency domain resource set and the second frequency domain resource set.

5. The method according to any one of claims 1 to 4, wherein the first frequency domain resource and the second frequency domain resource are different component carriers, and the method further comprises:
obtaining first indication information, wherein the first indication information indicates a fourth frequency domain resource, and the fourth frequency domain resource is a component carrier on which latest transmission of a HARQ process corresponding to the first transmission is performed.

6. The method according to any one of claims 1 to 4, wherein the method further comprises:
obtaining second indication information and third indication information, wherein the second indication information indicates a target frequency domain resource, the third indication information indicates a resource block RB position of a frequency domain resource used for the first transmission in the target frequency domain resource, and the target frequency domain resource is the first frequency domain resource or the second frequency domain resource.

7. The method according to claim 6, wherein
the first transmission is transmission of hybrid automatic repeat request-acknowledgment HARQ-ACK information of downlink data dynamically scheduled by using second DCI, and the second indication information is carried in the second DCI.

8. The method according to any one of claims 1 to 4, wherein the method further comprises:
obtaining fourth indication information, wherein the fourth indication information indicates a time domain position for performing the first transmission; and
determining a target frequency domain resource based on the time domain position, the frame structure A, and the frame structure B, wherein the target frequency domain resource is the first frequency domain resource or the second frequency domain resource.

9. The method according to claim 8, wherein the determining a target frequency domain resource based on the time domain position, the frame structure A, and the frame structure B comprises:
when the first transmission is uplink transmission, and the frame structure A and the frame structure B at the time domain position are uplink symbols, the target frequency domain resource is predefined in a protocol or is configured by a network device for a terminal device by using radio resource control RRC signaling; and/or
when the first transmission is uplink transmission, the frame structure A at the time domain position is an uplink symbol, and the frame structure B is not an uplink symbol, the target frequency domain resource is the first frequency domain resource; and/or
when the first transmission is uplink transmission, the frame structure A at the time domain position is not an uplink symbol, and the frame structure B is an uplink symbol, the target frequency domain resource is the second frequency domain resource; and/or
when the first transmission is downlink transmission, and the frame structure A and the frame structure B at the time domain position are downlink symbols, the target frequency domain resource is predefined in the protocol or is configured by using higher layer signaling; and/or
when the first transmission is downlink transmission, the frame structure A at the time domain position is a downlink symbol, and the frame structure B is not a downlink symbol, the target frequency domain resource is the first frequency domain resource; and/or
when the first transmission is downlink transmission, the frame structure A at the time domain position is not a downlink symbol, and the frame structure B is a downlink symbol, the target frequency domain resource is the second frequency domain resource.

10. The method according to any one of claims 1 to 4, wherein the method further comprises:
receiving third DCI, wherein the third DCI comprises a first field, and the first field indicates the frame structure A and the frame structure B.

11. The method according to any one of claims 1 to 4, wherein the method further comprises:
receiving fourth DCI, wherein the fourth DCI comprises a second field and a third field, the second field indicates the frame structure A, and the third field indicates the frame structure B.

12. The method according to claim 1, wherein the method specifically comprises:
when second transmission on the first frequency domain resource and third transmission on the second frequency domain resource overlap in time domain, determining to perform the first transmission on the first frequency domain resource or the second frequency domain resource, wherein the first transmission is one of the second transmission and the third transmission.

13. The method according to claim 12, wherein a communication direction of the second transmission is different from a communication direction of the third transmission.

14. The method according to claim 12 or 13, wherein the first transmission is the second transmission, and the second transmission and the third transmission meet at least one of the following conditions:
the second transmission is transmission dynamically scheduled by using DCI, and the third transmission is transmission configured by a higher layer;
a physical layer priority of the second transmission is higher than or equal to a physical layer priority of the third transmission;
a priority of the first frequency domain resource is higher than or equal to a priority of the second frequency domain resource; or
the second transmission is uplink transmission, and the third transmission is downlink transmission.

15. The method according to claim 12 or 13, wherein the first transmission is the second transmission, and the second transmission and the third transmission meet:
a physical layer priority of the second transmission is higher than a physical layer priority of the third transmission; or
a physical layer priority of the second transmission is equal to a physical layer priority of the third transmission, the second transmission is transmission dynamically scheduled by using DCI, and the third transmission is transmission configured by a higher layer.

16. The method according to claim 14 or 15, wherein the second transmission is a candidate physical layer downlink control channel PDCCH, and a time domain position of the second transmission is a PDCCH monitoring occasion; and
the physical layer priority of the second transmission is indicated in configuration signaling of a control resource set CORESET corresponding to the second transmission or configuration signaling of search space corresponding to the second transmission.

17. The method according to claim 12 or 13, wherein the first transmission is the second transmission, and the third transmission meets at least one of the following conditions:
the third transmission is an uplink data channel with a configured grant and the third transmission is not triggered;
the third transmission is an uplink control channel carrying a scheduling request and the third transmission is not triggered; or
the third transmission is a sounding reference signal SRS triggered by a negative acknowledgment NACK or an uplink control channel carrying channel state information triggered by the NACK, and the third transmission is not triggered.

18. A communication method, comprising:
sending information for configuring a first frequency domain resource and a second frequency domain resource, wherein the first frequency domain resource corresponds to a frame structure A, the second frequency domain resource corresponds to a frame structure B, and the frame structure A is different from the frame structure B; and
performing first transmission on the first frequency domain resource and/or the second frequency domain resource, wherein
the first frequency domain resource and the second frequency domain resource are two different bandwidth parts BWPs on a first component carrier, the first frequency domain resource and the second frequency domain resource are two different subbands in a first BWP, or the first frequency domain resource and the second frequency domain resource are different component carriers.

19. The method according to claim 18, wherein the first frequency domain resource and the second frequency domain resource meet at least one of the following relationships:
a frequency domain position of the first frequency domain resource does not overlap a frequency domain position of the second frequency domain resource;
a frequency domain width of the first frequency domain resource is the same as a frequency domain width of the second frequency domain resource; or
a subcarrier spacing of the first frequency domain resource is the same as a subcarrier spacing of the second frequency domain resource.

20. The method according to claim 18 or 19, wherein the method further comprises:
sending first configuration information, wherein the first configuration information indicates a first frequency domain resource set and a second frequency domain resource set.

21. The method according to any one of claims 18 to 20, wherein the first frequency domain resource and the second frequency domain resource are different component carriers, and the method further comprises:
sending first indication information, wherein the first indication information indicates a fourth frequency domain resource, and the fourth frequency domain resource is a component carrier on which latest transmission of a HARQ process corresponding to the first transmission is performed.

22. The method according to any one of claims 18 to 20, wherein the method further comprises:
sending second indication information and third indication information, wherein the second indication information indicates a target frequency domain resource, the third indication information indicates a frequency domain position of a frequency domain resource used for the first transmission in the target frequency domain resource, and the target frequency domain resource is the first frequency domain resource or the second frequency domain resource.

23. The method according to claim 22, wherein
the first transmission is hybrid automatic repeat request-acknowledgment HARQ-ACK transmission for downlink data transmission dynamically scheduled by using second DCI, and the second indication information is carried in the second DCI.

24. The method according to any one of claims 18 to 20, wherein the method further comprises:
sending fourth indication information, wherein the fourth indication information indicates a time domain position for performing the first transmission.

25. The method according to any one of claims 18 to 20, wherein the method further comprises:
sending third DCI, wherein the third DCI comprises a first field, and the first field indicates the frame structure A and the frame structure B.

26. The method according to any one of claims 18 to 20, wherein the method further comprises:
sending fourth DCI, wherein the fourth DCI comprises a second field and a third field, the second field indicates the frame structure A, and the third field indicates the frame structure B.

27. The method according to claim 18, wherein the method specifically comprises:
when second transmission on the first frequency domain resource and third transmission on the second frequency domain resource overlap in time domain, determining to perform the first transmission on the first frequency domain resource or the second frequency domain resource, wherein the first transmission is one of the second transmission and the third transmission.

28. The method according to claim 27, wherein a communication direction of the second transmission is different from a communication direction of the third transmission.

29. The method according to claim 27 or 28, wherein the first transmission is the second transmission, and the second transmission and the third transmission meet at least one of the following conditions:
the second transmission is transmission dynamically scheduled by using DCI, and the third transmission is transmission configured by a higher layer;
a physical layer priority of the second transmission is higher than or equal to a physical layer priority of the third transmission;
a priority of the first frequency domain resource is higher than or equal to a priority of the second frequency domain resource; or
the second transmission is uplink transmission, and the third transmission is downlink transmission.

30. The method according to claim 27 or 28, wherein the first transmission is the second transmission, and the second transmission and the third transmission meet:
a physical layer priority of the second transmission is higher than a physical layer priority of the third transmission; or
a physical layer priority of the second transmission is equal to a physical layer priority of the third transmission, the second transmission is transmission dynamically scheduled by using DCI, and the third transmission is transmission configured by a higher layer.

31. The method according to claim 29 or 30, wherein the second transmission is a candidate physical layer downlink control channel PDCCH, and a time domain position of the second transmission is a PDCCH monitoring occasion; and
the physical layer priority of the second transmission is indicated in configuration signaling of a control resource set CORESET corresponding to the second transmission or configuration signaling of search space search space corresponding to the second transmission.

32. The method according to claim 27 or 28, wherein the first transmission is the second transmission, and the third transmission meets at least one of the following conditions:
the third transmission is an uplink data channel with a configured grant and the third transmission is not triggered;
the third transmission is an uplink control channel carrying a scheduling request and the third transmission is not triggered; or
the third transmission is a sounding reference signal SRS triggered by a negative acknowledgment NACK or an uplink control channel carrying channel state information triggered by the NACK, and the third transmission is not triggered.

33. A communication apparatus, comprising:
a transceiver module, configured to receive information for configuring a first frequency domain resource and a second frequency domain resource; and
a processing module, configured to determine the first frequency domain resource and the second frequency domain resource based on the information received by the transceiver module, wherein the first frequency domain resource corresponds to a frame structure A, the second frequency domain resource corresponds to a frame structure B, and the frame structure A is different from the frame structure B, wherein
the transceiver module is further configured to perform first transmission on the first frequency domain resource and/or the second frequency domain resource that are/is determined by the processing module, wherein
the first frequency domain resource and the second frequency domain resource are two different bandwidth parts BWPs on a first component carrier, the first frequency domain resource and the second frequency domain resource are two different subbands in a first BWP, or the first frequency domain resource and the second frequency domain resource are different component carriers.

34. The apparatus according to claim 33, wherein a switching latency of switching from the first frequency domain resource to the second frequency domain resource is less than a switching latency of switching from the second frequency domain resource to a third frequency domain resource, the first frequency domain resource and the second frequency domain resource belong to a first frequency domain resource set, and the third frequency domain resource belongs to a second frequency domain resource set.

35. The apparatus according to claim 34, wherein the first frequency domain resource and the second frequency domain resource meet at least one of the following relationships:
a frequency domain position of the first frequency domain resource does not overlap a frequency domain position of the second frequency domain resource;
a frequency domain width of the first frequency domain resource is the same as a frequency domain width of the second frequency domain resource; or
a subcarrier spacing of the first frequency domain resource is the same as a subcarrier spacing of the second frequency domain resource.

36. The apparatus according to claim 35, wherein the transceiver module is further configured to:
receive first configuration information, wherein the first configuration information indicates the first frequency domain resource set and the second frequency domain resource set.

37. The apparatus according to any one of claims 33 to 36, wherein the processing module is further configured to obtain first indication information, wherein the first indication information indicates a fourth frequency domain resource, the fourth frequency domain resource is a component carrier on which latest transmission of a HARQ process corresponding to the first transmission is performed, and the first frequency domain resource and the second frequency domain resource are different component carriers.

38. The apparatus according to any one of claims 33 to 36, wherein the transceiver module is further configured to:
obtain second indication information and third indication information, wherein the second indication information indicates a target frequency domain resource, the third indication information indicates a resource block RB position of a frequency domain resource used for the first transmission in the target frequency domain resource, and the target frequency domain resource is the first frequency domain resource or the second frequency domain resource.

39. The apparatus according to claim 38, wherein
the first transmission is hybrid automatic repeat request-acknowledgment HARQ-ACK transmission for downlink data transmission dynamically scheduled by using second DCI, and the second indication information is carried in the second DCI.

40. The apparatus according to any one of claims 33 to 36, wherein the transceiver module is further configured to:
obtain fourth indication information, wherein the fourth indication information indicates a time domain position for performing the first transmission; and determine a target frequency domain resource based on the time domain position, the frame structure A, and the frame structure B, wherein the target frequency domain resource is the first frequency domain resource or the second frequency domain resource.

41. The method according to claim 40, wherein the processing module is specifically configured to:
when the first transmission is uplink transmission, and the frame structure A and the frame structure B at the time domain position are uplink symbols, the target frequency domain resource is predefined in a protocol or is configured by using higher layer signaling; and/or
when the first transmission is uplink transmission, the frame structure A at the time domain position is an uplink symbol, and the frame structure B is not an uplink symbol, the target frequency domain resource is the first frequency domain resource; and/or
when the first transmission is uplink transmission, the frame structure A at the time domain position is not an uplink symbol, and the frame structure B is an uplink symbol, the target frequency domain resource is the second frequency domain resource; and/or
when the first transmission is downlink transmission, and the frame structure A and the frame structure B at the time domain position are downlink symbols, the target frequency domain resource is predefined in the protocol or is configured by using higher layer signaling; and/or
when the first transmission is downlink transmission, the frame structure A at the time domain position is a downlink symbol, and the frame structure B is not a downlink symbol, the target frequency domain resource is the first frequency domain resource; and/or
when the first transmission is downlink transmission, the frame structure A at the time domain position is not a downlink symbol, and the frame structure B is a downlink symbol, the target frequency domain resource is the second frequency domain resource.

42. The apparatus according to any one of claims 33 to 36, wherein the transceiver module is further configured to:
receive third DCI, wherein the third DCI comprises a first field, and the first field indicates the frame structure A and the frame structure B.

43. The apparatus according to any one of claims 33 to 36, wherein the transceiver module is further configured to:
receive fourth DCI, wherein the fourth DCI comprises a second field and a third field, the second field indicates the frame structure A, and the third field indicates the frame structure B.

44. The apparatus according to claim 33, wherein the transceiver module is further configured to:
when second transmission on the first frequency domain resource and third transmission on the second frequency domain resource overlap in time domain, determine to perform the first transmission on the first frequency domain resource or the second frequency domain resource, wherein the first transmission is one of the second transmission and the third transmission.

45. The apparatus according to claim 44, wherein a communication direction of the second transmission is different from a communication direction of the third transmission.

46. The apparatus according to claim 44 or 45, wherein the first transmission is the second transmission, and the second transmission and the third transmission meet at least one of the following conditions:
the second transmission is transmission dynamically scheduled by using DCI, and the third transmission is transmission configured by a higher layer;
a physical layer priority of the second transmission is higher than or equal to a physical layer priority of the third transmission;
a priority of the first frequency domain resource is higher than or equal to a priority of the second frequency domain resource; or
the second transmission is uplink transmission, and the third transmission is downlink transmission.

47. The apparatus according to claim 44 or 45, wherein the first transmission is the second transmission, and the second transmission and the third transmission meet:
a physical layer priority of the second transmission is higher than a physical layer priority of the third transmission; or
a physical layer priority of the second transmission is equal to a physical layer priority of the third transmission, the second transmission is transmission dynamically scheduled by using DCI, and the third transmission is transmission configured by a higher layer.

48. The apparatus according to claim 46 or 47, wherein the second transmission is a candidate physical layer downlink control channel PDCCH, and a time domain position of the second transmission is a PDCCH monitoring occasion; and
the physical layer priority of the second transmission is indicated in configuration signaling of a control resource set CORESET corresponding to the second transmission or configuration signaling of search space search space corresponding to the second transmission.

49. The apparatus according to claim 44 or 45, wherein the first transmission is the second transmission, and the third transmission meets at least one of the following conditions:
the third transmission is an uplink data channel with a configured grant and the third transmission is not triggered;
the third transmission is an uplink control channel carrying a scheduling request and the third transmission is not triggered; or
the third transmission is a sounding reference signal SRS triggered by a negative acknowledgment NACK or an uplink control channel carrying channel state information triggered by the NACK, and the third transmission is not triggered.

50. A communication apparatus, comprising:
a processing module, configured to determine a first frequency domain resource and a second frequency domain resource, wherein the first frequency domain resource corresponds to a frame structure A, the second frequency domain resource corresponds to a frame structure B, and the frame structure A is different from the frame structure B; and
a transceiver module, configured to send information for configuring the first frequency domain resource and the second frequency domain resource, wherein
the transceiver module is further configured to perform first transmission on the first frequency domain resource and/or the second frequency domain resource that are/is determined by the processing module, wherein
the first frequency domain resource and the second frequency domain resource are two different bandwidth parts BWPs on a first component carrier, the first frequency domain resource and the second frequency domain resource are two different subbands in a first BWP, or the first frequency domain resource and the second frequency domain resource are different component carriers.

51. The apparatus according to claim 50, wherein the first frequency domain resource and the second frequency domain resource meet at least one of the following relationships:
a frequency domain position of the first frequency domain resource does not overlap a frequency domain position of the second frequency domain resource;
a frequency domain width of the first frequency domain resource is the same as a frequency domain width of the second frequency domain resource; or
a subcarrier spacing of the first frequency domain resource is the same as a subcarrier spacing of the second frequency domain resource.

52. The apparatus according to claim 50 or 51, wherein the transceiver module is further configured to:
send first configuration information, wherein the first configuration information indicates a first frequency domain resource set and a second frequency domain resource set.

53. The apparatus according to any one of claims 50 to 52, wherein the transceiver module is further configured to send first indication information, wherein the first indication information indicates a fourth frequency domain resource, the fourth frequency domain resource is a component carrier on which latest transmission of a HARQ process corresponding to the first transmission is performed, and the first frequency domain resource and the second frequency domain resource are different component carriers.

54. The apparatus according to any one of claims 50 to 52, wherein the transceiver module is further configured to send second indication information and third indication information, wherein the second indication information indicates a target frequency domain resource, the third indication information indicates a frequency domain position of a frequency domain resource used for the first transmission in the target frequency domain resource, and the target frequency domain resource is the first frequency domain resource or the second frequency domain resource.

55. The apparatus according to claim 54, wherein
the first transmission is hybrid automatic repeat request-acknowledgment HARQ-ACK transmission for downlink data transmission dynamically scheduled by using second DCI, and the second indication information is carried in the second DCI.

56. The apparatus according to any one of claims 50 to 52, wherein the transceiver module is further configured to send fourth indication information, wherein the fourth indication information indicates a time domain position for performing the first transmission.

57. The apparatus according to any one of claims 50 to 52, wherein the transceiver module is further configured to send third DCI, wherein the third DCI comprises a first field, and the first field indicates the frame structure A and the frame structure B.

58. The apparatus according to any one of claims 50 to 52, wherein the transceiver module is further configured to send fourth DCI, wherein the fourth DCI comprises a second field and a third field, the second field indicates the frame structure A, and the third field indicates the frame structure B.

59. The apparatus according to claim 50, wherein the transceiver module is further configured to:
when second transmission on the first frequency domain resource and third transmission on the second frequency domain resource overlap in time domain, determine to perform the first transmission on the first frequency domain resource or the second frequency domain resource, wherein the first transmission is one of the second transmission and the third transmission.

60. The apparatus according to claim 59, wherein a communication direction of the second transmission is different from a communication direction of the third transmission.

61. The apparatus according to claim 59 or 60, wherein the first transmission is the second transmission, and the second transmission and the third transmission meet at least one of the following conditions:
the second transmission is transmission dynamically scheduled by using DCI, and the third transmission is transmission configured by a higher layer;
a physical layer priority of the second transmission is higher than or equal to a physical layer priority of the third transmission;
a priority of the first frequency domain resource is higher than or equal to a priority of the second frequency domain resource; or
the second transmission is uplink transmission, and the third transmission is downlink transmission.

62. The apparatus according to claim 59 or 60, wherein the first transmission is the second transmission, and the second transmission and the third transmission meet:
a physical layer priority of the second transmission is higher than a physical layer priority of the third transmission; or
a physical layer priority of the second transmission is equal to a physical layer priority of the third transmission, the second transmission is transmission dynamically scheduled by using DCI, and the third transmission is transmission configured by a higher layer.

63. The apparatus according to claim 61 or 62, wherein the second transmission is a candidate physical layer downlink control channel PDCCH, and a time domain position of the second transmission is a PDCCH monitoring occasion; and
the physical layer priority of the second transmission is indicated in configuration signaling of a control resource set CORESET corresponding to the second transmission or configuration signaling of search space search space corresponding to the second transmission.

64. The apparatus according to claim 59 or 60, wherein the first transmission is the second transmission, and the third transmission meets at least one of the following conditions:
the third transmission is an uplink data channel with a configured grant and the third transmission is not triggered;
the third transmission is an uplink control channel carrying a scheduling request and the third transmission is not triggered; or
the third transmission is a sounding reference signal SRS triggered by a negative acknowledgment NACK or an uplink control channel carrying channel state information triggered by the NACK, and the third transmission is not triggered.

65. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 1 to 17 by using a logic circuit or executing code instructions.

66. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 18 to 32 by using a logic circuit or executing code instructions.

67. A computer-readable storage medium, wherein the storage medium stores a computer program or instructions; and when the computer program or the instructions are executed by a communication apparatus, the method according to any one of claims 1 to 17 or claims 18 to 32 is implemented.

68. A computer program, wherein when the computer program is executed by a communication apparatus, the method according to any one of claims 1 to 17 or claims 18 to 32 is implemented.

69. A communication system, comprising the apparatus according to any one of claims 33 to 49 or the apparatus according to claim 65, and the apparatus according to any one of claims 50 to 64 or the communication apparatus according to claim 66.
